# EUROPÄISCHE PATENTSCHRIFT

(11) **EP 2 817 269 B1**
(45) Veröffentlichungstag und Bekanntmachung des Hinweises auf die Patenterteilung: **31.07.2019**
(21) Anmeldenummer: 13705196.7
(22) Anmeldetag: 21.02.2013
(51) Int. Cl.: C03C 10/00, C03C 3/095

(54) **TRANSPARENTE FARBARME LITHIUMALUMINIUMSILIKAT-GLASKERAMIK UND DEREN VERWENDUNG**
TRANSPARENT LOW-COLOUR LITHIUM ALUMINIUM SILICATE GLASS CERAMIC AND THE USE THEREOF
VITROCÉRAMIQUE TRANSPARENTE PEU COLORÉE À BASE DE SILICATE DE LITHIUM ET D'ALUMINIUM ET UTILISATION DE LADITE VITROCÉRAMIQUE

(30) Priorität: 22.02.2012 DE 102012202697
(43) Veröffentlichungstag der Anmeldung: 31.12.2014
(73) Patentinhaber: SCHOTT AG, 55122 Mainz (DE)
(72) Erfinder: SIEBERS, Friedrich, 55283 Nierstein (DE); WEISS, Evelin, 55131 Mainz (DE); SCHÖNBERGER, Klaus, 55127 Mainz (DE); SCHIFFNER, Ulrich, 55126 Mainz (DE); GABEL, Falk, 65388 Schlangenbad (DE)
(74) Vertreter: Mehler Achler
(86) Internationale Anmeldenummer: PCT/EP2013/053485
(87) Internationale Veröffentlichungsnummer: WO 2013/124373

(56) Entgegenhaltungen:
- EP-A1- 1 837 314
- EP-B1- 1 837 312
- DE-A1-102008 050 263
- DE-A1-102010 032 113

## Beschreibung

Die Erfindung betrifft eine transparente, insbesondere farbarme Lithiumaluminiumsilikat-Glaskeramik gemäß dem Oberbegriff des Anspruchs 1. Die Erfindung bezieht sich auch auf die Verwendung einer solchen LAS-Glaskeramik.

Es ist bekannt, dass sich Gläser aus dem System Li₂O-Al₂O₃-SiO₂ in Glaskeramiken mit Hochquarz-Mischkristallen und/oder Keatit-Mischkristallen als Hauptkristallphasen umwandeln lassen.

Eine Schlüsseleigenschaft dieser Glaskeramiken mit Hochquarz-Mischkristallen als Hauptkristallphase ist die Herstellbarkeit von Werkstoffen, die in einem vorgegebenen Temperaturbereich über einen äußert niedrigen Wärmeausdehnungskoeffizienten verfügen. In der Regel wird das thermische Ausdehnungsverhalten so eingestellt, dass die Werkstoffe im Bereich ihrer Anwendungstemperaturen über sehr niedrige Ausdehnung, meist 0 ± 0,3 ·10⁻⁶/K verfügen. So wird z. B. bei Anwendung als Substratmaterial, wafer stages oder Spiegelträger für Teleskope die thermische Ausdehnung im Bereich der Raumtemperatur minimiert.

Für Anwendungen als Brandschutzglas, transparente Kaminsichtscheibe oder Kochfläche mit farbiger Unterseitenbeschichtung wird die thermische Nullausdehnung in einem Temperaturbereich zwischen Raumtemperatur und ca. 700 °C auf möglichst niedrige Werte eingestellt. Für Kochflächen mit Gas- und Induktionsbeheizung sind maximale Anwendungstemperaturen von ca. 500 °C ausreichend. Gängige Spezifikationen für die thermische Ausdehnung sind ca. 0 ± 0,15·10⁻⁶/K für Kochflächen und ca. 0 ± 0,3 • 10⁻⁶/K für Kaminscheiben (siehe dazu die Tabellen 3.3 und 3.4 in dem Buch "Low Thermal Expansion Glass Ceramics", Second Edition, Editor Hans Bach, Dieter Krause, Springer-Verlag Berlin Heidelberg 2005, ISBN 3-540-24111-6).

Aufgrund der niedrigen thermischen Ausdehnung bei ihren Anwendungstemperaturen besitzen diese Glaskeramiken eine ausgezeichnete Temperaturunterschiedsfestigkeit und Temperaturwechselbeständigkeit, sowie Dimensionskonstanz.

Bei der Anwendung als Kochfläche werden die transparenten farbarmen Glaskeramikplatten auf der Unterseite meist mit einer blickdichten Farbbeschichtung versehen um die Durchsicht auf die technischen Einbauten zu verhindern und die farbliche Anmutung bereitzustellen. Aussparungen in der Unterseitenbeschichtung ermöglichen das Anbringen von farbigen und weißen Displayanzeigen, meist Leuchtdioden.

Die transparenten Glaskeramiken unterscheiden sich von den transparent eingefärbten Glaskeramiken, bei denen zur Einfärbung im Volumen insbesondere V₂O₅ zugesetzt wird, um die Lichttransmission auf Werte unter 5 % zu verringern und die Durchsicht auf die technischen Einbauten unter der Kochfläche zu vermeiden.

Die großtechnische Herstellung transparenter Glaskeramiken erfolgt in mehreren Stufen. Zunächst wird das kristallisierbare Ausgangsglas aus einem Gemisch aus Scherben und pulverförmigen Gemengerohstoffen bei Temperaturen üblicherweise zwischen 1550 und 1700°C geschmolzen und geläutert. Bei der Schmelze wird typischerweise Arsen- und selten Antimonoxid als Läutermittel eingesetzt. Für transparente Glaskeramiken mit ihren vergleichsweise hohen Schmelztemperaturen ist Arsenoxid bei konventionellen Läutertemperaturen unter 1700 °C hinsichtlich guter Blasenqualitäten das technisch und wirtschaftlich günstigste Läutermittel. Außerdem ist Arsenoxid für die Transparenz (hohe Lichttransmission und geringe Farbe) der Glaskeramik vorteilhaft. Aus diesen zwingenden technischen Gründen sind die aktuell auf dem Markt erhältlichen transparenten Glaskeramiken NEOCERAM® N-0 der Firma Nippon Electric Glass, KERALITE® der Firma Eurokera und ROBAX® der Firma Schott AG mit Arsenoxid geläutert. Auch wenn diese Stoffe fest im Glasgerüst eingebunden sind, so sind sie doch unter Sicherheits- und Umweltschutzaspekten nachteilig. So müssen bei der Rohstoffgewinnung, der Rohstoffaufbereitung und wegen des Verdampfens aus der Schmelze besondere Vorsichtsmaßnahmen ergriffen werden. Es hat deswegen zahlreiche Entwicklungsanstrengungen gegeben, diese Stoffe zu ersetzen, die aber aus technischen und wirtschaftlichen Gründen bisher nicht umgesetzt werden konnten.

Nach dem Einschmelzen und Läutern erfährt das Glas üblicherweise eine Heißformgebung durch Walzen oder neuerdings auch durch Floaten um Platten herzustellen.

In einem anschließenden Temperaturprozess wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 810°C Keime, üblicherweise aus ZrO₂/TiO₂-Mischkristallen, erzeugt werden. Auch SnO₂ kann an der Keimbildung beteiligt sein. Bei anschließender Temperaturerhöhung wachsen die Hochquarz-Mischkristalle auf diesen Keimen auf.

Bei der maximalen Herstelltemperatur wird das Gefüge der Glaskeramik homogenisiert und die optischen, physikalischen und chemischen Eigenschaften eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 970°C bis 1250°C. Mit der Umwandlung erhöht sich der thermische Ausdehnungskoeffizient der Glaskeramik und durch weiteres Kristallwachstum tritt Lichtstreuung verbunden mit transluzentem bis opakem Aussehen auf.

Absorption und Streuung sind die optischen Phänomene, die bei wirtschaftlicher Herstellung beherrscht werden müssen.

Die bräunliche Färbung transparenter Lithiumaluminiumsilikat-Glaskeramiken hat verschiedene Ursachen die hauptsächlich auf Absorptionsmechanismen und teilweise auf Streuung beruhen.

In den Gemengerohstoffen für die Schmelzen ist das färbende Element Fe als Verunreinigung enthalten. Dieses färbt ionisch als Fe³⁺ sowie über Fe/Ti-Farbkomplexe. Wegen der hohen Kosten eisenarmer Rohstoffe ist es unwirtschaftlich den Fe₂O₃-Gehalt auf Werte von 100 ppm und darunter zu verringern.

Der stärkste Absorptionsmechanismus transparenter Glaskeramiken sind elektronische Übergänge an Farbkomplexen, die im kurzwelligen Bereich des sichtbaren Lichtes absorbieren und an denen die für die Keimbildung wirksame Komponente TiO₂ beteiligt ist. Ein Farbkomplex entsteht durch die Bildung von benachbarten Fe- und Ti-Ionen, zwischen denen elektronische Charge-Transfer-Übergänge stattfinden.

Beim Einsatz von SnO₂ als umweltfreundliches Läutermittel bewirken die entstehenden Sn/Ti-Komplexe eine zusätzliche Absorption. Die Fe/Ti-Farbkomplexe führen zu einer rotbraunen, die Sn/Ti-Farbkomplexe zu einer gelbbraunen Färbung. Die Sn/Ti-Farbkomplexe färben stärker und dieser Umstand hat bei transparenten Glaskeramiken bisher die Substitution des Läutermittels Arsenoxid durch SnO₂ erschwert.

Die Bildung der genannten Farbkomplexe findet maßgeblich bei der Keramisierung statt.

Um die Konzentrationen der Farbkomplexe zu verringern ist es vorteilhaft die Keimbildungs- und Kristallisationszeiten zu verkürzen. Dem steht entgegen dass die Verkürzung der Keimbildungszeit zu verstärkter Lichtstreuung und die Verkürzung der Kristallisationszeit zu Unebenheiten des Artikels führen.

Der wirksame Keimbildner TiO₂ ist nur mit Nachteilen bei der Schmelze und Formgebung durch die alternativen Keimbildner ZrO₂ und SnO₂ zu ersetzen. Das bedeutet, dass die gewünschten niedrigen Schmelztemperaturen und kurzen Keramisierungszeiten ohne visuell störende Streuung über die dafür benötigten Gehalte an TiO₂ zu einer verstärkten Färbung aufgrund der Farbkomplexe führen.

Für die Herstellung umweltfreundlicher transparenter Glaskeramiken ohne die Verwendung der Läutermittel Arsen- und Antimonoxid hat es zahlreiche Entwicklungsanstrengungen gegeben. Aus technischen und wirtschaftlichen Gründen konnten diese bisher nicht umgesetzt werden. Transparenz, das heisst hohe Lichttransmission, und geringe Färbung ohne visuelle störende Streuung konnten nicht mit günstigen Fertigungsbedingungen in Einklang gebracht werden.

Ein Ansatz sind Zusammensetzungen ohne den Keimbildner TiO₂, die zu Nachteilen bei der Herstellung führen.

So beschreibt die WO 2008065167A1 die Herstellung umweltfreundlicher transparenter Glaskeramiken ohne störende Färbung. Diese Glaskeramiken vermeiden den Zusatz von TiO₂ als Keimbildner und basieren auf einer Mischkeimbildung durch ZrO₂ und SnO₂. Die für ausreichend schnelle Keimbildung notwendigen ZrO₂- Gehalte betragen 2 - 5 Gew.-% und die SnO₂-Gehalte > 0,4 - 3 Gew.%. Bei diesen hohen Gehalten an ZrO₂ und SnO₂ wird das Einschmelzen des Gemenges verlangsamt, es erhöhen sich die Schmelz- und Formgebungstemperaturen und es verschlechtert sich die Entglasungsfestigkeit des Glases. Bei der Formgebung, die bei Viskositäten um die Verarbeitungstemperatur V_{A} von 10⁴ dPas stattfindet, kristallisieren störende Sn- und Zr- haltige Kristallphase aus. Dadurch kommt es zu einer unzulässigen Verringerung der Festigkeit der Gläser und der daraus hergestellten Glaskeramiken.

Ein weiterer Ansatz sind transparente Glaskeramiken ohne Arsen- und Antimonoxid als Läutermittel mit geringen Gehalten an TiO₂ die aber auch höhere Gehalte an SnO₂ und ZrO₂ als Keimbildner erfordern. In der WO 2008065166A1 ist TiO₂ auf 0,3 - <1,6 Gew.% begrenzt. Es werden Gehalte an SnO₂ von 0,25 - 1,2 Gew.% und ZrO₂ von >2 - 3,8 Gew.% benötigt. Diese hohen Gehalte gehen mit den beschriebenen Nachteilen bei der Schmelze und Formgebung sowie mangelnder Entglasungsfestigkeit einher.

Die Schriften JP 11-228180 A2 und JP 11-228181 A2 beschreiben umweltfreundliche Zusammensetzungen transparenter Glaskeramiken. Um ohne Verwendung von Arsenoxid als Läutermittel ausreichende Blasenqualitäten zu erreichen enthält die Glaskeramik eine Kombination der Läutermittel 0,1 - 2 Gew.-% SnO₂ und Cl. Das physikalische Entfärbungsmittel Nd₂O₃ wird nicht eingesetzt so dass der Sn/Ti- Farbkomplex voll zum Tragen kommt. Insbesondere die in den Ausführungsbeispielen aufgezeigten hohen SnO₂-Gehalte sind sehr schädlich für die Entglasungsfestigkeit. Die Schriften liefern keine Hinweise wie der SnO₂-Gehalt begrenzt werden muss, um ausreichende Entglasungsfestigkeit sicherzustellen. Weiterhin liefern diese Schriften keinen Hinweis für die Optimierung der Fertigungseigenschaften durch die Wahl der Komponenten CaO und SrO und die Einstellung von Kristallzusammensetzung und Zusammensetzung der Restglasphase durch die Verhältnisse der zweiwertigen Komponenten MgO, ZnO sowie CaO, SrO und BaO.

Die physikalische Entfärbung von transparenten Glaskeramiken durch Zusätze von Nd₂O₃ und CoO, die im längerwelligen roten Spektralbereich absorbieren, ist in der EP1837312 B1 offenbart. Die Schrift beschreibt vorzugsweise mit Arsenoxid geläuterte Zusammensetzungen. Neben der Verwendung von Arsenoxid wird auch die Verwendung von 0,1 - 0,4 Gew. SnO₂ in Verbindung mit Hochtemperaturläuterung größer 1700 °C als umweltfreundliches Läutermittel offenbart. Diese Schrift liefert keine Hinweise, wie die Zusammensetzung beschaffen sein muss, um besonders günstige Fertigungsbedingungen d.h. niedrige Schmelz- und niedrige Formgebungstemperaturen zu erreichen. Es besteht daher Bedarf, die Schmelz- und Formgebungstemperaturen ohne Nachteile bei der Keramisierungsgeschwindigkeit abzusenken, weil sie für die Energieeffizienz und wirtschaftliche Herstellung von entscheidender Bedeutung sind. Weiterhin liefert diese Schrift keinen Hinweis für die Optimierung der Entglasungsfestigkeit und Transparenz durch die Wahl der Komponenten CaO, SrO und BaO. Die Einstellung von Kristallzusammensetzung und Zusammensetzung der Restglasphase zur Verbesserung der Transparenz bei kurzen Keramisierungszeiten durch die Verhältnisse der zweiwertigen Komponenten MgO, ZnO sowie CaO, SrO und BaO wird nicht beschrieben.

Es ist Aufgabe der Erfindung, eine transparente, farbarme Lithiumaluminiumsilikat-Glaskeramik mit einer umweltfreundlichen Zusammensetzung, günstigen Fertigungseigenschaften und wirtschaftliche Herstellung, insbesondere hinsichtlich der Wahl der Gemengerohstoffe, kurze Keramisierungszeiten und der Schmelz- und Formgebungstemperaturen, zu finden.

Es ist auch Aufgabe der Erfindung, eine Verwendung der LAS-Glaskeramik zu finden.

Hierbei soll die Glaskeramik den Anforderungen an z. B. chemische Beständigkeit, mechanische Festigkeit, Transmission, Temperaturbelastbarkeit und Langzeitstabilität hinsichtlich Änderungen ihrer Eigenschaften (wie z.B. thermische Ausdehnung, Transmission, Aufbau von Spannungen) genügen. Hinsichtlich Temperaturbelastbarkeit ist die wenn auch geringe Schrumpfung der Glaskeramik (compaction) bei hohen Temperaturen die maßgebliche Eigenschaft. Da die Glaskeramikartikel im Einsatz meist ungleichmäßig durchwärmt werden bauen sich in langen Zeiten durch die compaction Spannungen auf.

Diese Aufgaben werden durch eine transparente Lithiumaluminiumsilikat-Glaskeramik gemäß Anspruch 1 und durch deren Verwendung gemäß Anspruch 35 gelöst.

Unter umweltfreundliche Zusammensetzung wird verstanden, dass die Glaskeramik bis auf unvermeidliche Rohstoffverunreinigungen technisch frei ist von Arsen- und Antimonoxid als übliche Läutermittel. Als Verunreinigung liegen diese Komponenten üblicherweise in Gehalten von weniger als 500 ppm in der Regel weniger als 200 ppm vor. In Ausnahmefällen kann der As₂O₃-Gehalt maximal 1000 ppm betragen, wenn bei der Schmelze Scherben einer transparenten Glaskeramik mit Arsenoxid als Läutermittel zugesetzt werden. Da mit diesem Recycling durch Energie- und Rohstoffeinsparung ein wirksamer Beitrag zum Umweltschutz geleistet wird, ist in diesem Fall ein höherer As₂O₃-Gehalt bis zu weniger als 1000 ppm zulässig. Dies ist die im Rahmen der Erfindung einzuhaltende Obergrenze im Hinblick auf die Rohstoffverunreinigungen.

Die wirtschaftlich günstigen Fertigungseigenschaften für eine wirtschaftliche Herstellung beinhalten kostengünstige Gemengerohstoffe, niedrige Schmelz- und Formgebungstemperaturen, Entglasungsfestigkeit und kurze Keramisierungszeiten. Bei den kurzen Keramisierungszeiten wird eine hohe Lichttransmission ohne visuell störende Lichtstreuung (Trübung) oder Färbung erreicht.

Darüber hinaus sollte die Glaskeramik bestimmte Eigenschaften erfüllen:
Die Transparenz, die sich nach dem Keramisieren einstellt, ist für die Qualität der Glaskeramiken eine wesentliche Eigenschaft. Die Lichttransmission gemessen im CIE-Farbsystem als Lichttransmission Y (brightness) soll daher möglichst hoch sein.

Die Färbung der transparenten farbarmen Lithiumaluminiumsilkat-Glaskeramik soll gering sein, damit die Farbe bei Durchsicht auf Gegenstände oder die Unterseitenbeschichtung sowie die Farbe von Anzeigen nicht verfälscht wird.

Die transparente Glaskeramik soll über keine visuell störende Lichtstreuung verfügen, damit die Durchsicht auf Gegenstände und leuchtende Anzeigen nicht verfälscht wird. Die Anzeigen von Displays unter der Glaskeramikplatte sollen klar, die Konturen scharf und ohne Trübung sichtbar sein.

Das Erreichen der gesamten Anforderungen für Lichttransmission, Färbung und Trübung wird bei kurzen Keramisierungszeiten von weniger als 200 min sichergestellt.

Besonders bevorzugt werden kurze Keramisierungszeiten von weniger als 90 min durchgeführt.

Hierbei kommt es zu Zielkonflikten.

Für kurze Keramisierungszeiten sind hohe Keimbildungsraten wesentlich, für die die Komponente TiO₂ ein wirksamer Bestandteil ist. Höhere TiO₂-Gehalte sind aber aufgrund der Bildung von Fe/Ti-Farbkomplexen und/oder Sn/Ti-Farbkomplexen kritisch. Daher sollte der TiO₂-Anteil < 2,5 Gew.-% betragen. Es hat sich gezeigt, dass es bei kurzen Keramisierungszeiten dagegen bei geringen TiO₂-Gehalten unter 1,6 Gew.-% zu einer verstärkten Trübung kommt, da als Folge verminderter Keimdichte auch die Anzahl der Kristalle verringert wird und damit deren Größe zunimmt. Höhere Kristallitgrößen verstärken die Streuung außerordentlich. Ein besonders bevorzugter Bereich für den TiO₂-Anteil ist daher 1,8 - < 2,5 Gew.-%.

Um diese Zielkonflikte zu lösen, wurde überraschend gefunden, dass die Mikrostruktur der Glaskeramik gezielt einzustellen ist.

Der erfindungsgemäße Ansatz besteht darin, die Mikrostruktur der Glaskeramik d.h. Kristallitphase und Restglasphase gezielt einzustellen. Um die Streuung auch bei schnellen Keramisierungen zu verringern ist es wünschenswert den Unterschied in den Brechungsindizies von Hochquarz-Mischkristallphase und der Restglasphase zu minimieren.

In umfassenden Versuchsreihen wurde gefunden, dass hierfür die zweiwertigen Komponenten MgO, ZnO, CaO, SrO und BaO eine Schlüsselrolle besitzen. In Stand der Technik werden CaO, SrO und BaO als optionale Komponenten aufgeführt. Es hat sich gezeigt, dass es erforderlich ist für die genannten zweiwertigen Komponenten enge Grenzen und Mindestgehalte einzuhalten.

Ein Anteil des MgO wird in die Hochquarz-Mischkristalle eingebaut. Ein MgO-Mindestgehalt von 0,2 Gew.-% wird benötigt, weil diese Komponente besonders effektiv ist, um die Viskosität der Glasschmelze bei hohen Temperaturen, also die 10²-Temperatur abzusenken. Diese Eigenschaft ist wichtig für die wirtschaftliche Herstellung. Bevorzugt beträgt der MgO-Mindestgehalt 0,3 Gew.-%.

Der MgO-Gehalt ist auf maximal 1,0 Gew.-%, bevorzugt bis zu 0,9 Gew.-% begrenzt. Höhere MgO-Gehalte sind nachteilig, weil sie den Ausdehnungskoeffizienten der Glaskeramik unzulässig erhöhen. Höhere Gehalte führen bei den angestrebten kurzen Keramisierungszeiten auch zu einer verstärkten Färbung c*.

ZnO wird ebenfalls in den Hochquarz-Mischkristall eingebaut. Die Komponente hat sich als besonders günstig für die Transparenz der Glaskeramik erwiesen. Insbesondere die Streuung bei kurzen Keramisierungszeiten wird vermindert. Der ZnO-Gehalt soll mindestens 1 Gew.-% betragen. Der ZnO-Gehalt ist wegen der Verdampfungsneigung bei Schmelze und Formgebung auf Werte von höchstens 2,5 Gew.-% begrenzt. Bevorzugt ist ein Gehalt größer als 1,5 Gew.-% bis zu 2,2 Gew.-%.

Die Erdalkalien CaO, SrO und BaO verbessern die Schmelzbarkeit und die Entglasungsfestigkeit bei der Formgebung des Glases. Die Gehalte müssen jedoch begrenzt werden, weil diese Komponenten nicht in die Kristallphase eingebaut werden, sondern in der Restglasphase der Glaskeramik verbleiben. Zu hohe Gehalte beeinträchtigen das Kristallisationsverhalten bei der Umwandlung des kristallisierbaren Ausgangsglases in die Glaskeramik. Außerdem wirken sich höhere Gehalte ungünstig auf die Zeit-/Temperaturbelastbarkeit der Glaskeramik aus.

Die Summe der Erdalkalien CaO und SrO beträgt bis 1,5 Gew.-% und der BaO-Gehalt 0 bis 1,5 Gew.-%.

CaO oder SrO sind bevorzugt jeweils mit Gehalten größer 0,05 Gew.-% enthalten, weil sie für die Entglasungsfestigkeit besonders wirksam sind. Für die Summe CaO + SrO ergibt sich ein besonders bevorzugter Mindestanteil von 0,1 Gew.-%. Eine besonders bevorzugte Obergrenze für CaO + SrO liegt bei 1,2 Gew.-%. Vorzugswiese liegt der SrO-Anteil bei 0,05 - 1,5 Gew.-%. Der CaO-Anteil liegt vorzugsweise bei 0,05 - 0,8 Gew.-%. CaO und SrO erhöhen den Brechungsindex weniger als BaO und sind damit vorteilhaft für die Angleichung der Berechnungsindizes von Restglas und Hochquartz-Mischkristall.

Die Streuungen können bei kurzen Keramisierungszeiten minimiert werden. Der Entglasung von Mullit und Zr- haltigen Kristallen wie Badelleyit oder Zirkonsilikat wird entgegengewirkt.

Der BaO-Gehalt beträgt maximal 1,5 Gew.-%, weil sonst die Streuung bei kurzen Keramisierungszeiten zunimmt. Offensichtlich erhöhen höhere Gehalte den Brechungsindex der Restglasphase in unvorteilhafter Weise. Vorzugsweise beträgt der BaO-Anteil mindestens 0,1 Gew.-%.

Die Summe der Erdalkalien CaO + SrO + BaO ist vorzugsweise 0,2 bis 2 Gew.-% und besonders bevorzugt 0,4 bis 1,8 Gew.-%. In diesem Bereich wird die Transparenz (Streuung, Farbe) günstig eingestellt, wenn mit kurzen Keramisierungszeiten gearbeitet wird. Dies wird auf eine vorteilhafte Einstellung der Zusammensetzung der Restglasphase zurückgeführt.

Für die Minimierung der Streuung bei kurzen Keramisierungszeiten von weniger als 200, bevorzugt weniger als 90 min hat es sich als vorteilhaft erwiesen, das Verhältnis der zweiwertigen Komponenten MgO und ZnO, die in die Hochquarz-Mischkristallphase eingebaut werden, zu den Komponenten CaO, SrO, BaO, die in das Restglas eingebaut werden, gezielt einzustellen.

MgO und ZnO werden in den hexagonalen Hochquarz-Mischkristall eingebaut und beeinflussen dort die Gitterkonstanten a und c und damit den Brechungsindex der Hochquarz-Mischkristalle. Es ist auch bekannt dass der Einbau von Mg bzw. Zn anstelle von Li die Anisotropie des Hochquarzes d.h. den Unterschied zwischen a und c-Achse verringert. (Müller "Volumen und thermische Ausdehnung von Aluminosilikat-Mischkristalien mit h-Quarz-Struktur", Fortschr. Miner. 63, Seite 7-20 (1985)). Möglicherweise kann der überraschend gefundene positive Effekt der Einstellung der Komponenten auch auf einer Verringerung der Doppelbrechung der Kristalle beruhen.

Die Komponenten CaO, SrO und BaO können nicht in die Hochquarz-Mischkristallphase eingebaut werden und verbleiben in der Restglasphase. Hier beeinflussen sie den Brechungsindex der Restglasphase. Es ist deshalb von Vorteil, wenn der Gehalt von MgO + ZnO größer ist als der von CaO + SrO + BaO (Bedingung B1).

Es hat sich weiterhin gezeigt, dass ein bestimmtes Verhältnis der zweiwertigen Komponenten MgO + ZnO zu den Komponenten CaO + SrO + BaO vorteilhaft ist, um die Lichtstreuung bei schneller Keramisierung (kurzen Keramisierungszeiten) zu vermindern.

Vorteilhaft ist ein Verhältnis der Summengehalte der Komponenten MgO + ZnO zu CaO + SrO + BaO von größer als 1 bis kleiner als 3 (Bedingung B2).

Besonders vorteilhaft ist ein Verhältnis der Komponenten MgO + ZnO zu CaO + SrO + BaO von größer als 1,5 bis kleiner als 3, insbesondere von 1,7 bis kleiner als 3. In diesem Bereich in Verbindung mit den eng spezifizierten Zusammensetzungen der einzelnen Komponenten stellt sich der gewünschte Effekt einer Minimierung der Lichtstreuung bei schneller Keramisierung besonders vorteilhaft ein.

Mit diesen Bedingungen für die Komponenten ist es möglich, die Mikrostruktur so zu optimieren, dass kurze Keramisierungszeiten mit verminderter Lichtstreuung möglich sind. Da bei kurzen Keramisierungszeiten die Bildung der Farbkomplexe bei geeigneter Gestaltung des Keramisierungsprogramms vermindert ist, kann deren Absorption verringert werden. Damit sind niedrigere Färbung c* und höhere Lichttransmission möglich. So wird bei einer schnellen Keramisierung mitn einer Keramisierungszeit von weniger als 90 min, bevorzugt weniger als 80 min, eine Lichttransmission Y größer als 82 % und eine Farbe c* von weniger als 5 bei visuell unauffälliger Streuung erreicht. Die weitere Verringerung der Farbe c* auf Werte kleiner als 4,5 und bevorzugt kleiner als 4 ist bevorzugt.

Die Merkmale der erfindungsgemäßen Glaskeramik beruhen daher vorzugsweise auf der Kombination einer definierten Zusammensetzung mit einer angepassten schnellen Keramisierung, wie sie in der Beispielen beschrieben wird.

Die erfindungsgemäße Glaskeramik enthält Hochquarz-Mischkristalle als Hauptkristallphase.

Für die Minimierung der Streuung ist es weiterhin vorteilhaft, die Kristallitgröße zu minimieren.

Bevorzugt besitzen die Hochquarz-Mischkristalle der Glaskeramik nach Keramisierung eine mittlere Kristallitgröße von weniger als 45, bevorzugt weniger als 40 nm. Die mittlere Kristallitgröße beträgt vorzugsweise mindestens 20 nm.

Der Kristallphasenanteil der Hochquarz-Mischkristalle der Glaskeramik beträgt vorzugsweise 60 - 85 Gew.-%, insbesondere 65 - 80 Gew.-%.

Der Kristallphasenanteil soll mindestens 60 Gew.-% betragen, weil dies für die Einstellung der niedrigen thermischen Ausdehnung vorteilhaft ist. Vorzugsweise beträgt der Kristallphasenanteil weniger als 80 Gew.-%. Bei höheren Werten wird es aufgrund der anfallenden Kristallisationswärme schwierig, die kristallisierbaren Gläser in kurzen Zeiten verformungsfrei zu keramisieren. Aufgrund der höheren Werte der Kristallisationswärme, die beim Kristallisieren der Glaskeramiken ungleichmäßig im Volumen anfallen, und der höheren Steifigkeit der Glaskeramik werden längere Zeiten benötigt, um verformungsfreie Glaskeramikartikel, wie zum Beispiel ebene Platten zu erhalten.

Nebenkristallphasen sind die sich bei der Keimbildung ausbildenden Mischkristalle aus den Keimbildnern TiO₂, ZrO₂ und/oder SnO₂ sowie Kristalle des Keatit-Mischkristalltyps. Der Anteil der Nebenkristallphasen in der Glaskeramik soll vorzugsweise weniger als 8 bevorzugt weniger als 6 Gew.-% betragen. Andernfalls kommt es durch den hohen Brechungsindex der Keimbildnerkristalle im Vergleich zum Restglas bzw. durch die größere Kristallitgröße der Keatit-Mischkristalle zu einer störenden Lichtstreuung der Glaskeramik, weil bei Keatit-Mischkristallen die mittlere Kristallitgröße in der Regel mindestens 100 nm beträgt. Die damit einhergehende Lichtstreuung macht sich bei transparenten Glaskeramiken sehr störend als weiße Trübung bemerkbar.

Die erfindungsgemäßen transparenten Lithiumaluminiumsilkat-Glaskeramiken enthalten Zusätze von Nd₂O₃ in Gehalten von 0,005 Gew.% (50 ppm) bis 0,15 Gew.% (1500 ppm). Bevorzugte Untergrenzen für Nd₂O₃ sind 0,01 Gew.-%, besonders bevorzugt 0,03 Gew.%, insbesondere 0,04 Gew.-%. Der Zusatz von Nd₂O₃ wirkt als physikalische Entfärbung und verringert die störende auf Fe/Ti- und Sn/Ti-Farbkomplexen beruhende Färbung. Unterhalb von 50 ppm Nd₂O₃ ist die Wirkung gering, oberhalb von 1500 ppm erhöhen sich die Rohstoffkosten in unvorteilhafter Weise, da das Nd₂O₃ ein kostspieliger Gemengerohstoff ist. Bevorzugt ist die Obergrenze daher 1000 ppm.

Die Oxide Li₂O, Al₂O₃ und SiO₂ in den bevorzugten, angegebenen Grenzen sind Bestandteile der Hochquarz-Mischkristalle.

Ein Mindestgehalt an Li₂O von 3,2 Gew.-% ist für eine hohe Keramisierungsgeschwindigkeit und für die Erniedrigung der 10²-Temperatur und der Verarbeitungstemperatur V_{A} erforderlich. Höhere Gehalte als 4,2 Gew.- % sind wegen der hohen Kosten von Li-Rohstoffen wirtschaftlich nachteilig. Ein Gehalt von weniger als 4 Gew.-% ist besonders vorteilhaft.

Um höhere Viskositäten des Ausgangsglases und die unerwünschte Entglasung von Mullit bei der Formgebung zu vermeiden, ist der Al₂O₃-Gehalt vorzugsweise auf maximal 23 Gew.-% begrenzt. Der Mindestgehalt für die Bildung ausreichender Mengen der Hochquarz-Mischkristallphase beträgt 19 Gew.-% bevorzugt 20 Gew.-%.

Der SiO₂-Gehalt soll maximal 68 Gew.-% betragen, weil diese Komponente die Viskosität des Glases und damit V_{A} und die 10²-Temperatur stark erhöht. Für gutes Einschmelzen der Gläser und für niedrige Schmelz- und Formgebungstemperaturen sind höhere Gehalte von SiO₂ unwirtschaftlich.

Der Gehalt an SiO₂ soll mindestens 64 Gew.-% betragen, weil dies für die geforderten Eigenschaften, wie z.B. chemische Beständigkeit, Keramisierungsgeschwindigkeit und Transparenz vorteilhaft ist. Die Streuung wird durch hohe SiO₂-Gehalte vermindert, was darauf hindeutet, dass die Brechungsindizes von Kristallphase und Restglas besser angepasst werden. Bevorzugt ist ein SiO₂-Gehalt von 65 bis 68 Gew.-%.

Die Zugabe der Alkalien Na₂O und K₂O verbessert die Schmelzbarkeit und die Entglasungsfestigkeit bei der Formgebung des Glases. Das Einschmelzen der schwer löslichen Rohstoffe für ZrO₂ und SiO₂ wird beschleunigt und die 10²-Temperatur sowie die Verarbeitungstemperatur erniedrigt. Die Summe der Alkalien Na₂O + K₂O soll vorzugsweise mindestens 0,1 Gew.-%, bevorzugt mindestens 0,2 Gew.-% betragen.

Die Gehalte müssen jedoch begrenzt werden, weil diese Komponenten nicht in die Kristallphasen eingebaut werden, sondern in der Restglasphase der Glaskeramik verbleiben. Zu hohe Gehalte beeinträchtigen das Kristallisationsverhalten bei der Umwandlung des kristallisierbaren Ausgangsglases in die Glaskeramik, hier insbesondere zu Lasten kurzer Keramisierungszeiten. Außerdem wirken sich höhere Gehalte ungünstig auf die Zeit-/Temperaturbelastbarkeit der Glaskeramik aus. Die Summe der Alkalien Na₂O + K₂O beträgt vorzugsweise maximal 1,5 Gew.-% und bevorzugt maximal 1,2 Gew.-%.

Die Alkalien Na₂O, K₂O und die Erdalkalien CaO, SrO, BaO reichern sich außer in der Restglasphase zwischen den Kristallen auch an der Oberfläche der Glaskeramik an. Beim Keramisieren bildet sich eine ca. 200 bis 1000 nm dicke glasige Oberflächenschicht, die nahezu frei ist von Kristallen und die mit diesen Elementen angereichert ist, wobei Li₂O abgereichert ist.

Diese glasige Oberflächenschicht wirkt sich günstig auf die chemische Beständigkeit der Glaskeramik aus. Bei Kaminscheiben wird der Angriff von schwefelhaltigen Säuren aus den Rauchgasen vermindert. Da besonders die Hochquarz-Mischkristalle angegriffen werden, wobei es zur Rissbildung der Glaskeramik kommt, wirkt die glasige Oberflächenschicht passivierend. Auch aus diesem Grund sind die Mindestgehalte an Na₂O + K₂O sowie CaO + SrO + BaO vorteilhaft.

TiO₂, ZrO₂ und/oder SnO₂ sind als Keimbildner vorgesehen. Die Komponenten bilden bei der Keimbildung Mischkristalle, auf denen die Hochquarz-Mischkristalle aufwachsen.

Der ZrO₂-Gehalt ist vorzugsweise auf weniger als 2 Gew.-% begrenzt, da höhere Gehalte das Einschmelzverhalten des Gemenges bei der Glasherstellung verschlechtern und die Entglasungsstabilität bei der Formgebung durch Bildung von Zr-haltigen Kristallen beeinträchtigt werden kann. Der Mindestgehalt beträgt 1,2 bevorzugt 1,5 Gew.-% um eine ausreichend schnelle Keimbildung sicherzustellen.

Die Komponente TiO₂ ist ein sehr wirksamer und für kurze Keramisierungszeiten wichtiger Bestandteil. Der TiO₂-Gehalt soll mindestens 1,6 Gew.-% und weniger als 2,5 Gew.-% betragen. Höhere Gehalte als 2,5 Gew.-% sind wegen der Bildung von Fe/Ti- und Sn/Ti- Farbkomplexen für die Farbe c* nachteilig.

Die Komponente SnO₂ ist wegen der Entglasungsfestigkeit vorzugsweise auf Werte von höchstens 0,5 Gew.-% begrenzt. Höhere Gehalte führen zur Kristallisation von Sn-haltigen Kristallphasen an den Kontaktmaterialien (z.B. Pt/Rh) bei der Formgebung und sind zu vermeiden. Wegen der Bildung von Sn/Ti- Farbkomplexen ist der Gehalt an SnO₂ möglichst gering zu wählen und die mindestens benötigte Menge wird durch die Forderung nach ausreichender Läuterwirkung bestimmt.

Der Mindestanteil von SnO₂ beträgt vorzugsweise 0,05 Gew.-%, besonders bevorzugt 0,08 Gew.-%, insbesondere > 0,1 Gew.-%.

Die Summe der Keimbildner TiO₂ + ZrO₂ + SnO₂ soll bevorzugt 3,5 bis 5 Gew.-% betragen. Der Mindestgehalt ist für eine ausreichend schnelle Keimbildung erforderlich. Die Obergrenze von 5 Gew.-% ergibt sich aus der Forderung nach Entglasungsfestigkeit.

Wegen der hohen Kosten eisenarmer Gemengerohstoffe ist es unwirtschaftlich den Fe₂O₃-Gehalt der Glaskeramik auf Werte von 0,01 Gew.-% (100 ppm) und darunter zu begrenzen. Da auch beim Recycling von Scherben ein Eintrag von Eisen über die Zerkleinerung stattfindet ist ein Fe₂O₃-Gehalt von größer als 0,011 Gew.-%, insbesondere von größer als 0,013 Gew.-% wirtschaftlich besonders vorteilhaft.

Andererseits erhöht sich mit dem Fe₂O₃-Gehalt der Glaskeramik auch die Konzentration der Fe/Ti-Farbkomplexe. Die Färbung (Buntheit c*) wird erhöht und durch Absorption wird die Lichttransmission Y (brightness) vermindert. Die Glaskeramik soll deswegen höchstens 0,03 Gew.-%, bevorzugt bis zu 0,022 Gew.-%, insbesondere bis zu 0,025 Gew.-% Fe₂O₃ enthalten.

Zusätze von CoO in Mengen bis zu 30 ppm können die Entfärbung unterstützen. Bevorzugt ist ein CoO-Gehalt von 0,1 ppm bis 20 ppm CoO.

Als Läutermittel wird vorzugsweise mindestens eins aus der Gruppe SnO₂, Sulfat- und Halogenidverbindungen ausgewählt, die dem Gemenge für die Schmelze mit Anteilen bis zu 1,5 Gew.-% zugesetzt werden. Bevorzugt wird SnO₂ in Gehalten größer als 0,05 Gew.-%, insbesondere größer als 0,08 Gew.-% eingesetzt.

Beim Zusatz von Halogenidverbindungen verdampfen diese zum größten Teil und gelangen in die Schmelzwannenatmosphäre. Dabei bilden sich korrosive Verbindungen wie HF, HCl und HBr. Diese sind nachteilig wegen der Korrosion der Feuerfeststeine in der Schmelzwanne und im Abgasstrang. Es wird daher bevorzugt auf den Zusatz von Halogenidverbindungen als Läuterhilfsmittel verzichtet.

Als Läutermittel ist 0,08 bis 0,25 Gew.-% SnO₂ vorzugsweise 0,05 Gew.-% bis weniger als 0,25 Gew.-% SnO₂ enthalten. Die Mindestmenge von 0,05 Gew.-%, insbesondere von 0,08 Gew.-% ist für eine ausreichende Läuterwirkung erforderlich. Der Gehalt ist zur Verbesserung der Entglasungsfestigkeit und wegen der Färbung durch Sn/Ti-Farbkomplexe auf 0,25 Gew.-% , insbesondere auf weniger als 0,25 Gew.-% begrenzt. Bevorzugt ist der SnO₂ Gehalt größer als 0,1 Gew.-%, um die Blasenqualität bei wirtschaftlichen Wannendurchsätzen zu verbessern. Bevorzugte Bereiche für SnO₂ sind > 0,05 bis 0,2 Gew.-%, insbesondere 0,08 bis 0,14 Gew.-%. Als zusätzliche weitere Läuterhilfsmittel können insbesondere Sulfatverbindungen und/oder Chlorverbindungen dem Gemenge bei der Schmelze zugesetzt werden. Der Gesamtgehalt der Läutermittel soll bis zu 1,5 Gew.-% betragen.

Für die Verringerung der Farbe ist es vorteilhaft möglichst geringe Mengen des Läutermittels SnO₂ einzusetzen. Um dabei eine ausreichende Läuterwirkung bei den geforderten Blasenqualitäten und Wannendurchsätzen zu erreichen ist es vorteilhaft, eine Hochtemperaturläuterung oberhalb 1700 bevorzugt oberhalb 1750°C durchzuführen. Der Gehalt an SnO₂ ist dabei bevorzugt größer 0,10 bis höchstens 0,25 Gew.-% besonders bevorzugt > 0,05 Gew.-% bis 0,2 Gew.-%. Es wird eine Blasenqualität von weniger als 2 Blasen/kg im Glas bzw. in der Glaskeramik (gemessen ab Blasengrößen größer als 0,1 mm in einer Dimension) erreicht

Dies ist vorzugsweise mit einer Färbung c* von kleiner als 5 in der Glaskeramik verbunden. Bevorzugt werden Werte von kleiner als 4,5 und weiter kleiner als 4 erreicht. Eine Hochtemperaturläuterung von mindestens 1800 °C erlaubt höhere Wannendurchsätze, weil die Freisetzung des Läutersauerstoffs beschleunigt ist. Allerdings können höhere Läutertemperaturen die Bildung von Sn²⁺ sowie Fe²⁺ und damit die Konzentration der Farbkomplexe erhöhen, so dass hier eine weitere Optimierung erforderlich ist.

Um die Läuterung zu verbessern, können zusätzlich weitere Läuterhilfsmittel wie z.B. Sulfat- und Halogenidverbindungen (F, Cl, Br) bei der Schmelze zugesetzt werden. Die Zusätze sind üblicherweise auf Mengen bis 1,5 Gew.-% begrenzt.

Bei der Läuterung verdampfen die Läuterhilfsmittel zum größten Teil. Bei dem bevorzugten Zusatz von Sulfatverbindungen und dem Verzicht auf Halogenidverbindungen entweicht der Schwefel nahezu vollständig bis auf wenige ppm infolge der geringen Löslichkeit im Glas.

Gemäß einer ersten Ausführungsform enthält die transparente Lithiumaluminiumsilikat-Glaskeramik als Hauptbestandteile die Komponenten (in Gew.-% auf Oxidbasis):

| | |
|---|---|
| Li₂O | 3,2 - 4,2 |
| Na₂O + K₂O | 0,1 - 1,5 |
| MgO | 0,2 - 1,0 |
| CaO + SrO | 0 - 1,5 |
| BaO | 0 - 1,5 |
| CaO + SrO + BaO | 0,2 - 2 |
| ZnO | 1 - 2,5 |
| Al₂O₃ | 19 - 23 |
| SiO₂ | 64 - 68 |
| TiO₂ | 1,6 - < 2,5 |
| ZrO₂ | 1,2 - < 2,0 |
| SnO₂ | 0 - 0,5 |
| Nd₂O₃ | 0,005 - 0,15 |
| Fe₂O₃ | > 0,01 - 0,03 |

Gemäß einer weiteren Ausführungsform besitzt die transparente Lithiumaluminiumsilikat-Glaskeramik, bzw. der daraus hergestellte Artikel, bevorzugt eine Zusammensetzung der Glaskeramik, die in Gew- % auf Oxidbasis enthält:

| | |
|---|---|
| Li₂O | 3,2 - < 4,0 |
| Na₂O + K₂O | 0,2 - 1,2 |
| MgO | 0,3 - 0,9 |
| CaO + SrO | 0,05 - 1,5 |
| BaO | 0 - 1,5 |
| CaO + SrO + BaO | 0,4 - 1,8 |
| ZnO | > 1,5 - 2,2 |
| B₂O₃ | 0 - 1 |
| Al₂O₃ | 20 - 23 |
| SiO₂ | 65 - 68 |
| TiO₂ | 1,6 - < 2,5 |
| ZrO₂ | 1,5 - < 2,0 |
| SnO₂ | > 0 - 0,5 |
| TiO₂ + ZrO₂ + SnO₂ | 3,5 - 5 |
| P₂O₆ | 0 - 2 |
| Nd₂O₃ | 0,005 - 0,1 |
| Fe₂O₃ | > 0,013 - 0,025 |

Gemäß einer weiteren Ausführungsform besitzt die transparente Lithiumaluminiumsilikat-Glaskeramik, bzw. der daraus hergestellte Artikel, bevorzugt eine Zusammensetzung der Glaskeramik, die in Gew- % auf Oxidbasis enthält:

| | |
|---|---|
| Li₂O | 3,2 - < 4,0 |
| Na₂O + K₂O | 0,2 - 1,2 |
| MgO | 0,3 - 0,9 |
| CaO + SrO | 0,05 - 1,5 |
| BaO | 0 - 1,5 |
| CaO + SrO + BaO | 0,4 - 1,8 |
| ZnO | > 1,5 - 2,2 |
| B₂O₃ | 0 - 1 |
| Al₂O₃ | 20 - 23 |
| SiO₂ | 65 - 68 |
| TiO₂ | 1,6 - < 2,5 |
| ZrO₂ | 1,5 - < 2,0 |
| SnO₂ | > 0 - 0,5 |
| TiO₂ + ZrO₂ + SnO₂ | 3,5 - 5 |
| P₂O₆ | 0 - 2 |
| Nd₂O₃ | 0,005 - 0,1 |
| Fe₂O₃ | > 0,011 - 0,025 |

Zur Verbesserung der Schmelzbarkeit und Entglasungsfestigkeit können bis zu 1 Gew.-% B₂O₃ und 2 Gew.-% P₂O₆ enthalten sein. Höhere Gehalte sind nachteilig für die chemische Beständigkeit und die Zeit-/Temperaturbelastbarkeit der Glaskeramik. Bevorzugt ist die Glaskeramik technisch frei von B₂O₃ und P₂O₅, das heisst die Gehalte liegen unter 0,3 Gew.-%.

Um die wirtschaftliche Herstellung mit guter Transparenz bei kurzen Keramisierungszeiten weiter zu verbessern besitzt die transparente Lithiumaluminiumsilikat-Glaskeramik, bzw. der daraus hergestellte Artikel, eine besonders bevorzugte Zusammensetzung der Glaskeramik, die in Gew.-% auf Oxidbasis enthält:

| | |
|---|---|
| Li₂O | 3,4 - 3,9 |
| Na₂O + K₂O | 0,2 - 1,0 |
| MgO | 0,4 - 0,9 |
| CaO + SrO | 0,1 - 1,2 |
| BaO | 0 - 1,3 |
| CaO + SrO + BaO | 0,6 - 1,6 |
| ZnO | > 1,5 - 2,0 |
| B₂O₃ | 0 - 1 |
| Al₂O₃ | 20 - 23 |
| SiO₂ | 65 - 68 |
| TiO₂ | 1,8 - < 2,5 |
| ZrO₂ | 1,5 - 1,9 |
| SnO₂ | 0,08 - 0,25 |
| TiO₂ + ZrO₂ + SnO₂ | 3,6 - 4,8 |
| P₂O₆ | 0 - 1 |
| Nd₂O₃ | 0,01 - 0,1 |
| Fe₂O₃ | > 0,013 - 0,022 |

Um die wirtschaftliche Herstellung mit guter Transparenz bei kurzen Keramisierungszeiten weiter zu verbessern besitzt die transparente Lithiumaluminiumsilikat-Glaskeramik, bzw. der daraus hergestellte Artikel, eine besonders bevorzugte Zusammensetzung der Glaskeramik, die in Gew.-% auf Oxidbasis enthält:

| | |
|---|---|
| Li₂O | 3,4 - 3,9 |
| Na₂O + K₂O | 0,2 - 1,0 |
| MgO | 0,4 - 0,9 |
| CaO + SrO | 0,1 - 1,2 |
| BaO | 0 - 1,3 |
| CaO + SrO + BaO | 0,6 - 1,6 |
| ZnO | > 1,5 - 2,0 |
| B₂O₃ | 0 - 1 |
| Al₂O₃ | 20 - 23 |
| SiO₂ | 65 - 68 |
| TiO₂ | 1,8 - < 2,5 |
| ZrO₂ | 1,5 - 1,9 |
| SnO₂ | 0,05 - < 0,25 |
| TiO₂ + ZrO₂ + SnO₂ | 3,6 - 4,8 |
| P₂O₅ | 0 - 1 |
| Nd₂O₃ | 0,01 - 0,1 |
| Fe₂O₃ | > 0,011 - 0,022 |

Bei den zuvor genannten Zusammensetzungsbeispielen ist zu berücksichtigen, dass die aufgeführten Komponenten wenigstens 98 Gew.-% in der Regel 99 Gew.-% der Gesamtzusammensetzung betragen. Eine Vielzahl von Elementen wie z. B. F, Cl, B, P, die Alkalien Rb, Cs oder Elemente wie Mn, Hf sind bei den großtechnisch verwendeten Gemengerohstoffen übliche Verunreinigungen. Andere Verbindungen wie z.B. solche der Elemente W, Nb, Y, Mo, Seltene Erden, Bi können in geringen Anteilen enthalten sein.

Es hat sich bei Glaskeramiken eingebürgert als Maß für die Färbung die Größe c* (Buntheit, Farbe) aus dem CIELAB Farbsystem mit den Koordinaten L*, a*, b* heranzuziehen. Die Farbe c* der LAS-Glaskeramik beträgt bei Messung mit Normlicht C, 2° Beobachterwinkel bei einer 4 mm dicken polierten Glaskeramikprobe vorzugsweise weniger als 5,5 bevorzugt weniger als 5 und besonders bevorzugt weniger als 4,5.

Die Lichttransmission der LAS-Glaskeramik gemessen im CIE-Farbsystem als Lichttransmission Y (brightness) beträgt mindestens 81%, bevorzugt mindestens 83 %. Die Werte gelten gemessen mit Normlicht C, Beobachterwinkel 2° für eine 4 mm dicke polierte Glaskeramikprobe.

Vorzugsweise weist die LAS-Glaskeramik keine visuell stehende Streuung auf.

Die Streuung wird bei Durchsicht über die polierten Kanten einer 4 bis 7 cm langen Glaskeramikprobe visuell als gut bewertet. Referenz ist hier die arsengeläutere transparente Glaskeramik ROBAX® der Firma SCHOTT AG. Diese verfügt über eine sehr geringe Streuung.

Die Messung der Trübung (engl. haze) nach ASTM D1003 beträgt für 4mm dicke polierte Proben der LAS-Glaskeramik bevorzugt weniger als 1,5 % und besonders bevorzugt weniger als 1%. Die Haze-Messung korreliert mit der visuellen Messung der Streuung, allerdings kann die Haze-Messung diese Methode vor allem bei geringen Werten um 1 % aber nicht ersetzen.

Bei Einhaltung der Grenzwerte wird eine visuell störende Streuung vermieden. Bei geringen Haze-Werten um 1 % empfiehlt es sich, beide Methoden zu kombinieren.

Durch das erfindungsgemäße Verhältnis der zweiwertigen Komponenten MgO und ZnO zu den Erdalkalien CaO, SrO und BaO wird bei schneller Keramisierung von weniger als 90 min eine hohe Transparenz der Glaskeramik erreicht.

Vorzugsweise weist die LAS-Glaskeramik eine Lichttransmission (brightness) Y von vorzugsweise größer als 82 %, bevorzugt größer als 84 % auf. Die Farbe c* liegt vorzugsweise bei kleiner als 5,5, bevorzugt kleiner als 5 und besonders bevorzugt kleiner als 4,5 insbesondere kleiner als 4, gemessen bei 4 mm Dicke mit Normlicht C sowie Beobachterwinkel 2° und die LAS-Glaskeramik ist vorzugsweise ohne visuell störende Lichtstreuung.

Die erfindungsgemäßen Glaskeramiken haben gegenüber den bekannten arsengeläuterten transparenten Glaskeramiken den Vorteil geringerer Werte der compaction und damit eine höhere Temperaturbelastbarkeit.

Der Wassergehalt der Ausgangsgläser zur Herstellung der transparenten Glaskeramiken liegt abhängig von der Wahl der Gemengerohstoffe und der Prozessbedingungen bei der Schmelze vorzugsweise zwischen 0,015 und 0,06 mol/l. Dies entspricht β-OH-Werten von 0,16 bis 0,64 mm⁻¹ für die kristallisierbaren Ausgangsgläser.

Die für wirtschaftliche Herstellung bedeutsame niedrige Schmelztemperatur wird durch eine niedrigere Viskosität der Glasschmelze bei hohen Temperaturen sichergestellt. Hierfür ist die Temperatur, bei der die Viskosität der Glasschmelze 10² dPas beträgt, eine charakteristische Größe. Diese so genannte 10²-Temperatur liegt für die erfindungsgemäßen Glaskeramiken bei der Schmelze der Ausgangsgläser vorzugsweise bei weniger als 1770 °C, bevorzugt weniger als 1760 °C.

Die niedrige Viskosität der Schmelze bei hohen Temperaturen erlaubt es, die Temperatur in der Schmelzwanne niedriger einzustellen und verlängert damit die Lebensdauer der Schmelzwanne, da die Korrosion der Feuerfeststeine verringert wird. Weiterhin wird durch die niedrige Glasviskosität der Energieverbrauch bezogen auf die Menge der hergestellten Glaskeramik verringert. Eine niedrige 10²-Temperatur trägt damit auch zur Umweltfreundlichkeit der Glaskeramik bei. Da eine niedrige Glasviskosität auch den Aufstieg von Blasen und damit die Läuterung begünstigt, ist eine niedrige Glasviskosität auch vorteilhaft für hohe Wannendurchsätze, da das Einschmelzen und die Läuterung schneller ablaufen.

Nach der Läuterung sind als gute Blasenqualitäten solche mit Blasenzahlen von unter 5, bevorzugt unter 2 Blasen/kg im kristallisierbaren Ausgangsglas, bzw. in der Glaskeramik (gemessen ab Blasengrößen größer als 0,1 mm in einer Dimension) bevorzugt.

Ebenso ist es wirtschaftlich vorteilhaft, die Temperatur bei der Formgebung abzusenken, da dadurch die Standzeiten der Formgebungswerkzeuge erhöht werden kann und weniger Verlustwärme anfällt. Die Formgebung, meist Walzen oder Floaten, findet bei einer Viskosität der Glasschmelze von 10⁴ dPas statt. Diese Temperatur wird auch als Verarbeitungstemperatur V_{A} bezeichnet und liegt für die erfindungsgemäßen Glaskeramiken vorzugsweise bei weniger als 1325 °C, bevorzugt bei weniger als 1320 °C.

Die transparente Glaskeramik soll bei der Formgebung aus der Schmelze über eine ausreichende Entglasungsfestigkeit verfügen. Andernfalls bilden sich bei der Formgebung im Kontakt mit dem Formgebungsmaterial (z. B. Platin/Rhodium bei der Ziehdüse im Walzprozess) Kristalle, die eine kritische Größe erreichen. Sie sind dann meist visuell auffällig und für die Festigkeit der späteren Glaskeramik kritisch.

Die Grenztemperatur, unterhalb der es zu kritischen Entglasungen kommt, d.h. die obere Entglasungsgrenze (OEG), liegt vorzugsweise bei mindestens 10 °C unter der Verarbeitungstemperatur V_{A}. Bei dieser Mindestdifferenz wird für den Formgebungsprozess ein ausreichendes Prozessfenster definiert. Vorteilhaft ist ein Prozessfenster V_{A}-OEG, das mindestens 20 °C beträgt.

Die bevorzugte Geometrie für die transparente farbarme Glaskeramik, bzw. die daraus hergestellten Artikel, ist in Form von Platten. Die Platte weist vorzugsweise eine Dicke von 2,5 bis 14 mm auf, weil sich damit wichtige Anwendungen erschließen.

Bevorzugte Verwendungen der LAS-Glaskeramik sind solche als Kaminsichtscheibe, Brandschutzverglasung, Displayscheibe, Kochfläche, sowie als Sicherheitsverglasung mit mechanischer oder ballistischer Schutzwirkung.

Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher in der Regel unter 6 mm gewählt.

Geeignete Formgebungsverfahren für die benötigte plattenförmige Geometrie sind Walzen und Floaten.

Die Glaskeramikplatte und vorzugsweise der daraus hergestellte Artikel können dabei nicht nur eben ausgeformt sein, sondern auch dreidimensional verformt sein. Beispielsweise abgekantete, gewinkelte oder gewölbte Platten können verwendet werden. Die Platten können rechtwinklig oder in anderen Formen vorliegen sowie neben ebenen Bereichen dreidimensional verformte Bereiche wie z.B. Woks oder eingewalzte Stege oder Flächen als Erhebungen bzw. Vertiefungen enthalten. Die geometrischen Verformungen der Platten werden bei der Heißformgebung, wie z. B. durch strukturierte Formgebungswalzen oder durch nachgelagerte Heißformgebung an den Ausgangsgläsern z. B. durch Brenner oder durch Schwerkraftsenken vorgenommen. Beim Keramisieren wird mit unterstützenden keramischen Formen, gearbeitet um unkontrollierte Änderungen der geometrischen Form zu vermeiden.

Vorzugsweise findet die transparente Lithiumaluminiumsilikat- Glaskeramik mit Hochquarz-Mischkristallen als Hauptkristallphase Verwendung als Kaminsichtscheibe, Brandschutzglas, Sicherheitsglas, Backofensichtscheibe, insbesondere für Pyrolyseherde oder als Abdeckungen von Leuchten hoher Energie.

Durch Aufbringen einer blickdichten Beschichtung auf Ober- und/oder Unterseite lässt sich aus der transparenten Glaskeramik eine farbige Kochfläche mit der geforderten Abdeckung herstellen, um den Einblick in die technischen Einbauten unter der Kochfläche zu verhindern.

Aussparungen in der Beschichtung erlauben das Anbringen von Sensorbereichen, und farbigen und weißen Anzeigen sowie Displays.

Es ist möglich Beschichtungen auf Ober- und Unterseite der transparenten Glaskeramikplatte zu kombinieren und dabei auch teiltransparente Schichten einzubeziehen. Ebenso können Markierungen z. B. für Kochzonen aufgebracht werden. Dabei sind die bekannten verschiedenen Arten von Beschichtungen wie z. B. mit keramischen Dekorfarben, Lüsterfarben, Silikon- und Sol Gel- basierte Farben, gesputterte Schichten und so weiter kombinierbar.

Die Anzeigen bestehen aus Licht emittierenden elektronischen Bauteilen, meist aus Leuchtdioden. Es sind alle Formen von Anzeigen, punktuelle wie flächige möglich. Die Emissionsspektren der strahlenden Anzeigen können ein oder mehrere Maxima und breite Bereiche haben, so dass die Anzeigen farblich oder weiss erscheinen. Aufgrund der geringen Färbung c* der Glaskeramik können auch schwarz/weiße und farbige Displays oder Bildschirme unter der Glaskeramik angeordnet werden, die ohne störende Farbverfälschung von außen sichtbar sind. Optional kann die Farbe der Anzeigen für den Betrachter durch bevorzugt auf der Unterseite aufgebrachte Farbfilter oder Farbschichten geändert oder korrigiert werden. Weiterhin kann die Farbe der Anzeige gezielt verändert werden, um zum Beispiel eine typische Standard-Anzeige in verschiedenen Farbtönen erscheinen zu lassen. Damit können mit geringem Aufwand kundenspezifische Differenzierungen über den Farbton dargestellt werden. Der Farbton der Anzeigen kann dadurch ggf. auch korrigiert werden, wenn er durch die Glaskeramik verändert wird.

Die Beheizung der Kochfläche erfolgt wie üblich mit Gasbrennern, Strahlungsbeheizungen oder induktiv.

Bei Kaminsichtscheiben wird eine gute Durchsicht auf den Brennraum und die Flammen gewünscht. Bei Kochflächen mit farbiger Unterseitenbeschichtung soll die Farbe der Unterseitenbeschichtung nicht durch die Farbe der Glaskeramik verfälscht werden.

Für die genannten Verwendungen sind eine Lichttransmission (brightness) Y von größer als 82 bevorzugt größer als 84 %, und die geringe Farbe c* von kleiner als 5,5, bevorzugt kleiner als 5, und besonders bevorzugt kleiner als 4,5, insbesonders < 4, gemessen bei 4 mm Dicke mit Normlicht C und 2° Beobachterwinkel und ohne visuell störende Lichtstreuung bevorzugt.

Nach Umwandlung in eine Glaskeramik mit Keatit-Mischkristallen als Hauptkristallphase findet diese in transluzenter oder opaker Form bevorzugt Verwendung als Abdeckplatte in Mikrowellenherden oder Auskleidung von Brennräumen. Dabei beträgt die Lichttransmission weniger als 15%. Bei Verwendung als transluzent weiße Kochfläche kann die Lichttransmission einer Glaskeramikplatte mit höheren Werten durch eine Unterseitenbeschichtung auf die niedrigen Werte vermindert werden. Dabei können Bereiche z. B. für Anzeigen ausgespart werden.

Die vorliegende Erfindung wird anhand der folgenden Beispiele weiter verdeutlicht.

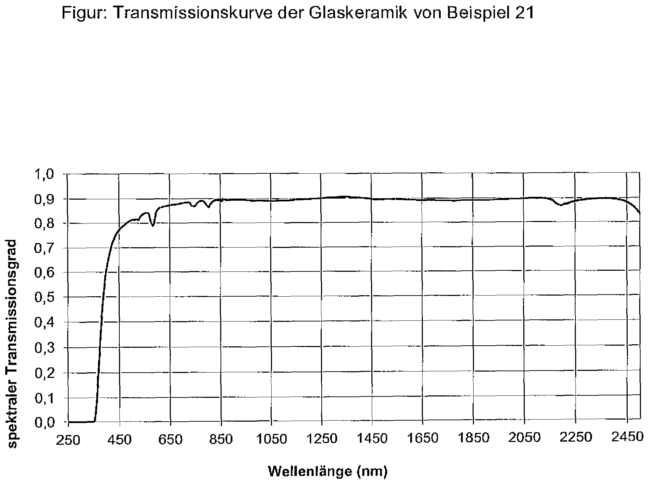

In der einzigen Figur ist die Transmissionskurve der Glaskeramik von Beispiel 21 dargestellt.

Die Ausgangsgläser wurden aus in der Glasindustrie üblichen Rohstoffen bei Temperaturen von ca. 1620°C 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach dieser Homogenisierung wurden die Gläser für 2 Stunden bei 1640°C geläutert. Anschließend wurden Stücke von ca. 140x140x30 mm³ Größe gegossen und in einem Kühlofen, beginnend ab 660°C auf Raumtemperatur abgekühlt. Die Gussstücke wurden in die für die Untersuchungen und für die Keramisierung benötigten Größen unterteilt.

Für einige Ausführungsbeispiele sind in Tabelle 1 Zusammensetzungen und Eigenschaften der kristallisierbaren Ausgangsgläser für transparente Glaskeramiken aufgeführt. Dabei handelt es sich bei den Gläsern 1 bis 8 um erfindungsgemäße Gläser und bei den Gläsern 9, 10 um Vergleichsgläser außerhalb der vorliegenden Erfindung. Die Zusammensetzungen der Vergleichsgläser sind außerhalb der Erfindung und zeigen die beschriebenen Nachteile bei den Fertigungseigenschaften. Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt sind F, Cl, B, P, Mn, Rb, Cs, Hf die üblicherweise weniger als 0,1 Gew.-% betragen. Sie werden oft über die Rohstoffe für die verwandten Komponenten eingeschleppt, so z.B. Rb und Cs über die Na-, bzw. K- Rohstoffe, oder Hf über den Zr-Rohstoff.

Der mit IR-Spektroskopie gemessene Wassergehalt der Gläser ist in Tabelle 1 angegeben.

In Tabelle 1 sind auch die Eigenschaften im glasigen Zustand, wie z. B. Transformationstemperatur Tg, Verarbeitungstemperatur V_{A}, 10²- Temperatur, obere Entglasungsgrenze OEG, die Dichte sowie Transmissionswerte gemessen an 4 mm dicken polierten Gläsern mit Normlicht C, 2° aufgeführt. Zur Messung der OEG werden die Gläser in Pt/Rh10-Tiegeln geschmolzen. Anschließend werden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG.

Die Tabelle 2 zeigt die Keramisierungsbedingungen und Eigenschaften der mit dem Keramisierungsprogramm 1 hergestellten Glaskeramiken und Tabelle 3 die mit dem Keramisierungsprogramm 2.

Bei dem Keramisierungsprogramm 1 wird bis zu einer Temperatur von 600 °C im Keramisierungsofen in 20 min aufgeheizt. Der Temperaturbereich von 700 bis 810 °C ist für die Keimbildung wichtig. Die Temperaturerhöhung wird in diesem Bereich so an die jeweilige Zusammensetzung angepasst, dass eine Lichtstreuung durch zu große Kristallite vermieden wird. Oberhalb von ca. 810 °C erfolgt die Kristallisation der gewünschten Hochquarz-Mischkristallphase. In diesem Bereich setzt sich die Bildung der störenden Fe/Ti- und Sn/Ti- Farbkomplexe fort. Bei der Maximaltemperatur Tₘₐₓ wird die Zusammensetzung von Kristallen und Restglas eingestellt und die Mikrostruktur homogenisiert. Damit werden die chemischen und physikalischen Eigenschaften eingestellt. Beim Keramisierungsprogramm 1 wird im Bereich der Keimbildung bei der Temperatur T_{KB} eine Haltezeit t_{KB} eingeführt. Ebenso wird die maximale Temperatur Tₘₐₓ und Haltezeit tₘₐₓ individuell an die Zusammensetzung angepasst. Die Werte sowie die gesamte Keramisierungszeit sind in der Tabelle 2 angegeben.

### Keramisierungsprogramm 1:

a) schnelles Aufheizen Raumtemperatur auf 600 °C in 20 min,
b) Temperaturerhöhung von 600 °C auf Keimbildungstemperatur T_{KB} mit einer Heizrate von 5 °C/min, Haltezeit t_{KB} von 30 min bei T_{KB}, weiteres Aufheizen mit 2,5 °C/min auf 800 °C,
c) Temperaturerhöhung von T_{KB} auf Maximaltemperatur Tₘₐₓ mit einer Heizrate von 2,5 °C/min, Haltezeit tₘₐₓ von 10 min bei Tₘₐₓ,
d) Abkühlen auf 700 °C mit 6 °C/min, dann schnelle Abkühlung auf Raumtemperatur.

Die unzureichende Farbe einiger Beispiele in Tabelle 2 mit Werten c* > 5,5 zeigt die Notwendigkeit auf, die Farbe durch ein optimiertes Keramisierungsprogramm zu verbessern. Das Keramisierungsprogramm 2 ist für die erfindungsgemäßen Zusammensetzungen in Richtung kurze Keramisierungszeiten und verbesserte Transparenz, das heißt höhere Lichttransmission und geringere Farbe c* optimiert. Die Keimbildungszeiten dürfen gegenüber Programm 1 nur so weit verkürzt werden dass die Streuung nicht visuell auffällig wird. In einem Rollenofen, der hohe Heizraten ermöglicht, wird in 10 min auf 720 °C aufgeheizt. Für die erfindungsgemäßen Zusammensetzungen ist das die Temperatur, ab der eine signifikante Keimbildungsrate einsetzt. Im Bereich hoher Keimbildungsraten bis 810 °C wird die Temperatur mit angepasster Heizrate kontinuierlich erhöht. Die Zeit in diesem Temperaturbereich wird so gewählt, dass keine visuell störende Streuung auftritt.

Oberhalb 810 °C wird die Heizrate wegen der weiter ablaufenden Bildung der Farbkomplexe erhöht. Die Zeit in diesem Temperaturbereich wird so gewählt, dass bei den erfindungsgemäßen Zusammensetzungen sichergestellt ist, dass die Ebenheit der Glaskeramikplatten zufrieden stellend ist. Die größten Abweichungen von der Ebenheit betragen weniger als 0,3% der Kantenlänge der Platte. Die Kristallisation und Einstellung der Mikrostruktur (Kristall- und Restglas-Zusammensetzung) wird in diesem Temperaturbereich und bei der Maximaltemperatur abgeschlossen. Die Keramisierungszeit dieses Programms beträgt 68 min.

### Keramisierungsprogramm 2:

a) schnelles Aufheizen von Raumtemperatur auf 720 °C in 10 min,
b) Temperaturerhöhung von 720 bis 810 °C in 36 min,
c) Temperaturerhöhung von 810 °C auf Maximaltemperatur 920 °C in 10 min, Haltezeit von 7 min bei Tₘₐₓ,
d) Abkühlen auf 780 °C in 4,5 min, dann schnelle Abkühlung auf Raumtemperatur durch Heißentnahme.

Die Transmissionsmessungen wurden an polierten Platten der Dicke 4 mm mit Normlicht C, 2° durchgeführt. Bei den Messungen an den transparenten Glaskeramiken (Tabelle 2 bzw. Tabelle 3) sind die Transmissionswerte bei ausgewählten Wellenlängen sowie die Lichttransmission angegeben. Die Bezeichnungen Lichttransmission und Helligkeit (brightness) Y entsprechen dergleichen Messgröße, gemessen nach DIN 5033.

Es sind die Farbkoordinaten L*, a*, b* im CIELAB-System und die Größe c* als Maß für die Farbe angegeben. Zusätzlich ist auch der Yellowness-Index nach Norm ASTM 1925/70 (77, 85) als Maß für die Färbung angegeben.

Die Streuung wird in Durchsicht über die polierten Kanten einer 4 mm dicken polierten Glaskeramikprobe visuell bewertet. Die Streuung wird über Grenzmuster gemessen und reicht von einer Skala 0 (keine Streuung wie z. B in den Ausgangsgläsern Tabelle 1), über 1 (sehr geringe Streuung wie in der Glaskeramik ROBAX® der Firma SCHOTT AG), 2 (geringe Streuung) bis 10 (transluzentes milchiges Aussehen). Werte ab 3 werden für die Anforderungen des Marktes als nachteilig angesehen, weil die Streuung bei bestimmten Lichtverhältnissen bereits visuell störend sein kann.

Für das bezüglich Lichtstreuung kritischere schnellere Keramisierungsprogramm 2 in Tabelle 3 wurde auch der Haze- Wert bestimmt. Dabei wird die Trübung mit Normlicht C an beidseitig polierten 4 mm dicken Platten mit einem kommerziellen Messgerät "haze-guard plus" der Firma BYK-Gardner gemessen und durch den Haze-Wert charakterisiert.

Für das Keramisierungsprogramm 1 sind in Tabelle 2 zusätzliche Eigenschaften der Glaskeramik wie Infrarottransmission bei 1600 nm, thermische Ausdehnung zwischen 20 und 700°C, Dichte und der mittels Röntgenbeugung gemessene Phasengehalt der Hauptkristallphase, bestehend aus Hochquarz-Mischkristallen, sowie die mittlere Kristallitgröße aufgezeigt. Die für die Temperaturbelastbarkeit im Einsatz maßgebliche compaction wurde durch Temperung bei 700 °C, 15 h an 100 mm langen Stäben der mit Programm 1 hergestellten Glaskeramik bestimmt. Im Vergleich zu der Glaskeramik ROBAX® der Firma SCHOTT AG mit einem guten Wert der compaction von 21 µm sind das weiter verbesserte Werte.

Die Beispiele 9, 10 in Tabelle 2 und die Beispiele 19, 20 in Tabelle 3 sind Vergleichsglaskeramiken außerhalb der Erfindung, die aus den aufgeführten kristallisierbaren Vergleichsgläsern hergestellt wurden. Die Vergleichsbeispiele zeigen die beschriebenen Nachteile bei der Transparenz (Farbe und Streuung).

Bei einem zusätzlichen Beispiel Nr. 21 wurde eine Zusammensetzung mit Li₂O 3,71 Gew.%, Na₂O 0,51 Gew.%, K₂O 0,10 Gew.%, MgO 0,62 Gew.%, CaO 0,24 Gew.%, SrO 0,53 Gew.%, BaO 0,52 Gew.%, ZnO 1,80 Gew.%, Al₂O₃ 21,5 Gew.%, SiO₂ 66,2 Gew.%, TiO₂ 2,16 Gew.%, ZrO₂ 1,77 Gew.%, SnO₂ 0,18. Gew.%, Nd₂O₃ 0,053 Gew.% und Fe₂O₃ 0,014 Gew.% großtechnisch geschmolzen. Die Zusammensetzung ist entsprechend den Anforderungen an die wirtschaftliche Herstellung und Transparenz einer Lithiumaluminiumsilikat-Glaskeramik optimiert.

Sie zeichnet sich durch niedrige 10²- Temperatur, niedrige Verarbeitungstemperatur und gute Entglasungsfestigkeit aus.

Die Glasschmelze wurde bei hohen Temperaturen von ca. 180C°C, 15 min geläutert. Die Blasenqualität dieses Glases war hervorragend und betrug < 2 Blasen/kg Glas. Es wurde bei der Formgebung ein beidseitig glattes Glasband von 4 mm Dicke gewalzt und zur Vermeidung von Spannung in einem Kühlofen abgekühlt. Aus diesem Glasband wurden Platten der Größe 500 x 500 x 4 mm geschnitten und in einem großtechnischen Rollenofen keramisiert. Das Keramisierungsprogramm entsprach Programm 2 und die kristallisierbaren Glasplatten befanden sich auf einer keramischen ebenen Unterlagsplatte. Die erhaltenen transparenten Glaskeramikplatten verfügten über eine sehr gute Ebenheit von < 0,3 % der Kantenlänge.

Die Transmissionskurve dieser erfindungsgemäßen Glaskeramik ist in der Figur dargestellt. Die Transparenz entspricht den vorteilhaften Werten der Erfindung mit Lichttransmission Y von 82,7 %, Färbung c* von 4,4 und ohne visuell störende Streuung. Die Messung erfolgte wieder mit Normlicht C an beidseitig polierten 4mm dicken Platten Der Haze-Wert wurde zu 0,9 % bestimmt.

Bei einem weiteren Beispiel Nr. 22 wurde die Zusammensetzung der großtechnischen Glasschmelze variiert, um die Transmission weiter zu verbessern. Die Zusammensetzung des Glases war Li₂O 3,77 Gew.%, Na₂O 0,51 Gew.%, K₂O 0,11 Gew.%, MgO 0,63 Gew.%, CaO 0,24 Gew.%, SrO 0,54 Gew.%, BaO 0,52 Gew.%, ZnO 1,80 Gew.%, Al₂O₃ 21,3 Gew.%, SiO₂ 66,5 Gew.%, TiO₂ 2,20 Gew.%, ZrO₂ 1,77 Gew.%, SnO₂ 0,11. Gew.%, Nd₂O₃ 0,055 Gew.% und Fe₂O₃ 0,013 Gew.%. Der Wassergehalt wurde zu 0,040 mol/l bestimmt.

Die Glaszusammensetzung zeichnet sich aus durch gute Schmelzbarkeit (niedrige 10²- Temperatur von weniger als 1760 °C), niedrige Verarbeitungstemperatur unter 1320 °C und gute Entglasungsfestigkeit (V_{A}-OEG > 20°C).
Die Verfahrensparameter bei Schmelze und Keramisierung entsprachen Beispiel 21.

Die Blasenqualität verblieb bei den guten Werten von < 2 Blasen/kg Glas.
Die Lichttransmission Y betrug 84,6 %, die Färbung c* war 3,5. Die Probe war ohne visuell störende Streuung und der Haze-Wert wurde zu 0,8 % bestimmt.

**Tabelle 1: Zusammensetzungen und Eigenschaften erfindungsgemäßer Ausgangsgläser und Vergleichsgläser**

| **Glas Nr.** | | **1** | **2** | **3** | **4** | **5** | **6** | **7** | **8** | **9** | **10** |
|---|---|---|---|---|---|---|---|---|---|---|---|
| **Zusammensetzung** | **Gew.%** | | | | | | | | | | |
| Li2O | | 3,73 | 3,59 | 3,52 | 3,57 | 3,66 | 3,75 | 3,69 | 3,66 | 3,40 | 3,44 |
| Na2O | | 0,49 | 0,50 | 0,35 | 0,26 | 0,38 | 0,45 | 0,49 | 0,49 | 0,14 | 0,61 |
| K2O | | 0,05 | 0,07 | 0,19 | 0,14 | 0,12 | 0,18 | 0,10 | 0,10 | | 0,24 |
| MgO | | 0,73 | 0,83 | 0,89 | 0,93 | 0,88 | 0,44 | 0,63 | 0,64 | 0,73 | |
| CaO | | 0,15 | 0,12 | 0,24 | 0,25 | 0,22 | 0,25 | 0,24 | 0,24 | 0,45 | |
| SrO | | 0,36 | 0,50 | 0,53 | 0,49 | 0,49 | 0,49 | 0,52 | 0,53 | 0,52 | |
| BaO | | 0,72 | 0,73 | 0,12 | 0,54 | 0,56 | 0,49 | 0,53 | 0,52 | 2,11 | 2,12 |
| ZnO | | 1,64 | 1,70 | 1,74 | 1,79 | 1,77 | 1,79 | 1,81 | 1,82 | 0,32 | 0,19 |
| Al2O3 | | 21,5 | 21,3 | 21,4 | 21,0 | 21,1 | 21,5 | 21,5 | 21,6 | 22,2 | 22,3 |
| SiO2 | | 66,4 | 66,4 | 66,7 | 66,7 | 66,5 | 66,4 | 66,2 | 66,2 | 65,8 | 67,0 |
| TiO2 | | 2,10 | 2,11 | 2,17 | 2,26 | 2,19 | 2,18 | 2,18 | 2,38 | 2,14 | 1,77 |
| ZrO2 | | 1,80 | 1,75 | 1,77 | 1,76 | 1,76 | 1,76 | 1,76 | 1,76 | 1,83 | 1,99 |
| SnO2 | | 0,24 | 0,24 | 0,22 | 0,22 | 0,22 | 0,20 | 0,18 | | 0,26 | 0,26 |
| Fe2O3 | | 0,018 | 0,019 | 0,021 | 0,022 | 0,020 | 0,021 | 0,019 | 0,019 | 0,020 | 0,029 |
| Nd2O3 | | 0,048 | 0,048 | 0,051 | 0,052 | 0,053 | 0,054 | 0,053 | 0,005 | 0,027 | |
| | | | | | | | | | | | |
| H2O - Gehalt | mol/l | | 0,036 | 0,038 | 0,040 | 0,041 | 0,041 | 0,040 | 0,035 | 0,027 | 0,036 |
| Läuterzusatz | Gew.% | 0,17 (SO3) | | | | | | | 0,17 (SO3) | | |
| ∑ CaO+SrO | Gew.% | 0,51 | 0,62 | 0,77 | 0,74 | 0,71 | 0,74 | 0,76 | 0,77 | 0,97 | |
| ∑ CaO+SrO + BaO | Gew.% | 1,23 | 1,35 | 0,89 | 1,28 | 1,27 | 1,23 | 1,29 | 1,29 | 3,08 | 2,12 |
| ∑ MgO+ZnO/ s CaO+SrO+BaO | | 1,93 | 1,87 | 2,96 | 2,13 | 2,09 | 1,81 | 1,89 | 1,91 | 0,34 | 0,09 |
| Transformationstemperatur Tg | °C | 684 | 687 | 682 | 676 | 682 | 679 | 677 | 675 | 708 | 719 |
| Verarbeitungstemperatur VA | °C | 1318 | 1320 | 1316 | 1308 | 1311 | 1316 | 1308 | 1313 | 1329 | 1367 |
| 10²- Temperatur | °C | 1754 | 1761 | 1758 | 1751 | 1753 | 1788 | 1741 | 1757 | 1758 | 1804 |
| OEG | °C | 1290 | 1285 | 1300 | 1280 | 1275 | 1280 | 1285 | 1290 | 1345 | 1400 |
| Entglasungsfestigkeit VA -OEG | °C | 28 | 35 | 16 | 28 | 36 | 36 | 23 | 23 | -16 | -33 |
| Dichte | g/cm³ | 2,459 | 2,463 | 2,456 | 2,462 | 2,462 | 2,459 | 2,461 | 2,460 | 2,470 | 2,444 |

| **Transmission Norm licht C, 2°** | | | | | | | | | | | |
|---|---|---|---|---|---|---|---|---|---|---|---|
| **4 mm Dicke** | | | | | | | | | | | |
| 400 nm | % | 82,4 | 82,1 | 81,3 | 79,8 | 80,6 | 80,4 | 82,2 | 82,1 | 83,5 | 82,3 |
| Lichttransmission Y | % | 89,2 | 89,2 | 89,0 | 88,7 | 88,7 | 88,7 | 89,1 | 89,5 | 89,7 | 90,4 |
| Yellowness Index | | 2,6 | 2,8 | 3,0 | 3,8 | 3,4 | 3,5 | 2,7 | 3,7 | 2,4 | 3,7 |
| L* | | 95,6 | 95,6 | 95,6 | 95,4 | 95,5 | 95,5 | 95,6 | 95,8 | 95,9 | 96,2 |
| a* | | -0,6 | -0,6 | -0,7 | -0,7 | -0,7 | -0,7 | -0,6 | -0,5 | -0,5 | -0,6 |
| b* | | 1,5 | 1,6 | 1,7 | 2,2 | 1,9 | 2,0 | 1,5 | 2,0 | 1,3 | 2,1 |
| c* | | 1,6 | 1,7 | 1,9 | 2,3 | 2,0 | 2,1 | 1,6 | 2,1 | 1,4 | 2,1 |

**Tabelle 2: Eigenschaften erfindungsgemäßer Glaskeramiken und Vergleichsglaskeramiken (Keramisierungsprogramm 1)**

| **Beispiel Nr.** | | **1** | **2** | **3** | **4** | **5** | **6** | **7** | **8** | **9** | **10** |
|---|---|---|---|---|---|---|---|---|---|---|---|
| **Glas Nr,** | | **1** | **2** | **3** | **4** | **5** | **6** | **7** | **8** | **9** | **10** |
| **Keramisierungsprogramm** | | 1 | 1 | 1 | 1 | 1 | 1 | 1 | 1 | 1 | 1 |
| Keimbildungstemperatur TKB, 30min | °C | 750 | 740 | 745 | 744 | 740 | 735 | 735 | 735 | 770 | 775 |
| Kristallisation Tmax, 10min | °C | 897 | 896 | 895 | 892 | 896 | 892 | 892 | 892 | 922 | 944 |
| Keramisierungszeit | min | 182 | 183 | 182 | 180 | 183 | 182 | 182 | 182 | 192 | 203 |

| **Eigenschaften keramisiert** | | | | | | | | | | | |
|---|---|---|---|---|---|---|---|---|---|---|---|
| Dichte | g/cm³ | 2,539 | 2,541 | 2,540 | 2,546 | 2,543 | 2,533 | 2,537 | 2,535 | 2,557 | 2,540 |
| therm Ausdehnung α_{20/700} | 10-6/K | -0,09 | 0,05 | 0,05 | 0,06 | 0,04 | -0,25 | - 0,1 | -0,06 | +0,27 | 0,03 |

| **Transmission Normlicht C, 2°** | | | | | | | | | | | |
|---|---|---|---|---|---|---|---|---|---|---|---|
| **4 mm Dicke** | | | | | | | | | | | |
| 400 nm | % | 61,8 | 58,2 | 61,1 | 50,7 | 52,7 | 59,9 | 61,4 | 72,0 | 62,7 | 62,2 |
| 1600 nm | % | 88,2 | 88,0 | 87,4 | 86,8 | 87,5 | 87,6 | 88,0 | 89,0 | 87,2 | 86,3 |
| Lichttransmission Y | % | 85,4 | 84,8 | 84,7 | 82,5 | 83,8 | 84,5 | 84,2 | 89,0 | 84,0 | 82,9 |
| Yellowness Index | | 8,3 | 9,0 | 8,3 | 12,3 | 11,1 | 9,3 | 9,0 | 5,9 | 10,8 | 14,0 |
| L* | | 94,1 | 93,8 | 93,8 | 92,8 | 93,4 | 93,7 | 93,6 | 95,6 | 93,5 | 93,0 |
| a* | | -0.8 | -1,0 | -0,8 | -1,2 | -1,2 | -0,9 | -0,7 | -0,6 | -0,8 | -0,6 |
| b* | | 4,5 | 5,0 | 4,5 | 6,7 | 6,1 | 5,1 | 4,8 | 3,2 | 5,8 | 7,4 |
| c* | | 4,6 | 5,1 | 4,6 | 6,8 | 6,2 | 5,1 | 4,9 | 3,3 | 5.9 | 7,4 |

| **Streuung** | | | | | | | | | | | |
|---|---|---|---|---|---|---|---|---|---|---|---|
| visuell | | 1 | 1 | 1 | 1 | 1 | 2 | 1 | 2 | 7 | 10 |

| **Compaction** | | | | | | | | | | | |
|---|---|---|---|---|---|---|---|---|---|---|---|
| (700°C, 15h, 100mm Stab) | µm | 8 | 8 | 8 | 8 | 9 | 11 | 10 | 9 | 5 | 5 |

| **Röntgenbeugung** | | | | | | | | | | | |
|---|---|---|---|---|---|---|---|---|---|---|---|
| HQMK-Phasengehalt | % | 74 | 73 | 73 | 72 | 73 | 72 | 73 | 72 | 72 | 67 |
| mittlere Kristallitgröße | nm | 36 | 37 | 37 | 36 | 38 | 37 | 38 | 36 | 49 | 38 |

**Tabelle 3: Eigenschaften erfindungsgemäßer Glaskeramiken und Vergleichsglaskeramiken (Keramisierungsprogramm 2)**

| **Beispiel Nr.** | | **11** | **12** | **13** | **14** | **15** | **16** | **17** | **18** | **19** | **20** |
|---|---|---|---|---|---|---|---|---|---|---|---|
| **Glas Nr.** | | **1** | **2** | **3** | **4** | **5** | **6** | **7** | **8** | **9** | **10** |
| **Keramisierungsprogramm Eigenschaften keramisiert Transmission Normlicht C, 2°** | | 2 | 2 | 2 | 2 | 2 | 2 | 2 | 2 | 2 | 2 |
| **4mm Dicke** | | | | | | | | | | | |
| 400 nm | % | 63,0 | 62,1 | 64,0 | 58,9 | 58,9 | 65,8 | 66,8 | 73,8 | 57,7 | 50,7 |
| 1600 nm | % | 87,9 | 88,9 | 87,2 | 87,7 | 87,7 | 87,9 | 87,9 | 89 | 87,4 | 83,7 |
| Lichttransmission Y | % | 84,2 | 85,4 | 84,1 | 84,2 | 84,0 | 85,1 | 84,5 | 89,2 | 83,7 | 75,3 |
| Yellowness Index | | 8,2 | 8,4 | 7,5 | 8,8 | 9,0 | 7,2 | 7,2 | 5,3 | 12,0 | 19,9 |
| L* | | 93,5 | 94,0 | 93,5 | 93,5 | 93,5 | 93,9 | 93,6 | 95,7 | 93,3 | 89,5 |
| a* | | -0,7 | -0,7 | -0,6 | -0,9 | -0,9 | -0,6 | -0,4 | -0,5 | -1,2 | -0,5 |
| b* | | 4,4 | 4,6 | 4,0 | 4,8 | 4,9 | 3,8 | 3,8 | 2,9 | 6,6 | 10,3 |
| c* | | 4,4 | 4,6 | 4,0 | 4,8 | 5,0 | 3,9 | 3,8 | 2,9 | 6,7 | 10,3 |

| **Streuung** | | | | | | | | | | | |
|---|---|---|---|---|---|---|---|---|---|---|---|
| visuell | | 1 - 2 | 1 | 2 | 1 | 1 | 1 - 2 | 1 - 2 | 2 | 5 | 8 |
| haze (4 mm Dicke) | % | 0,6 | | 1,1 | 0,7 | 0,6 | 0,6 | | 1,2 | 2,3 | 5,6 |

## Patentansprüche

1. Transparente Li₂O-Al₂O₃-SiO₂-(LAS) Glaskeramik, **dadurch gekennzeichnet,**
• **dass** sie Hochquarz-Mischkristalle als Hauptkristallphase enthält,
• **dass** sie bis auf unvermeidliche Rohstoffverunreinigungen arsen- und antimonfrei ist,
• **dass** sie folgende Komponenten (in Gew.-% auf Oxidbasis) enthält:
| | |
|---|---|
| TiO₂ | 1,6 - < 2,5 |
| Nd₂O₃ | 0,005 - 0,15 |
| MgO | 0,2 - 1,0 |
| ZnO | 1 - 2,5 |
| CaO + SrO | 0 - 1,5 |
| BaO | 0 - 1,5 |
mit der Bedingung B1:
MgO + ZnO > CaO + SrO + BaO.

2. Transparente LAS-Glaskeramik nach Anspruch 1, **dadurch gekennzeichnet,**
**dass** eine Bedingung B2 gilt:
1 < (MgO + ZnO) / (CaO + SrO + BaO) < 3.

3. Transparente LAS-Glaskeramik nach Anspruch 2, **dadurch gekennzeichnet,**
**dass** für die Bedingung B2 gilt:
1,5 < (MgO + ZnO) / (CaO + SrO + BaO) < 3.

4. Transparente LAS-Glaskeramik nach einem der vorhergehenden Ansprüche, **dadurch gekennzeichnet,**
**dass** der TiO₂-Anteil 1,8 - < 2,5 Gew.-% beträgt.

5. Transparente LAS-Glaskeramik nach einem der vorhergehenden Ansprüche, **dadurch gekennzeichnet,**
**dass** der BaO-Anteil mindestens 0,1 Gew.-% beträgt.

6. Transparente LAS-Glaskeramik nach einem der vorhergehenden Ansprüche, **dadurch gekennzeichnet,**
**dass** die Summe von CaO + SrO 0,05 - 1,5 Gew.-% beträgt.

7. Transparente LAS-Glaskeramik nach einem der vorhergehenden Ansprüche, **dadurch gekennzeichnet,**
**dass** der SrO-Anteil 0,05 - 1,5 Gew.-% beträgt.

8. Transparente LAS-Glaskeramik nach einem der vorhergehenden Ansprüche, **dadurch gekennzeichnet,**
**dass** der CaO-Anteil 0,05 - 0,8 Gew.-% beträgt.

9. Transparente LAS-Glaskeramik nach einem der vorhergehenden Ansprüche, **dadurch gekennzeichnet,**
**dass** die Summe der Erdalkalikomponenten CaO + SrO + BaO 0,2 bis 2 Gew.-% beträgt.

10. Transparente LAS-Glaskeramik nach einem der vorhergehenden Ansprüche, **dadurch gekennzeichnet,**
**dass** die Summe der Erdalkalikomponenten CaO + SrO + BaO 0,4 bis 1,8 Gew.-% beträgt.

11. Transparente LAS-Glaskeramik nach einem der vorhergehenden Ansprüche, **gekennzeichnet durch** eine mittlere Kristallitgröße der Hochquarz-mischkristalle von weniger als 45 nm.

12. Transparente LAS-Glaskeramik nach einem der vorhergehenden Ansprüche, **dadurch gekennzeichnet,**
**dass** sie die Komponenten Li₂O, Al₂O₃ und SiO₃ mit folgenden Anteilen (in Gew.-% auf Oxidbasis) enthält:
| | |
|---|---|
| Li₂O | 3,2 - 4,2 |
| Al₂O₃ | 19 - 23 |
| SiO₂ | 64 - 68. |

13. Transparente LAS-Glaskeramik nach einem der vorhergehenden Ansprüche, **dadurch gekennzeichnet,**
**dass** sie folgende Komponenten (in Gew.-% auf Oxidbasis) enthält:
| | |
|---|---|
| Na₂O + K₂O | 0,1 - 1,5. |

14. Transparente LAS-Glaskeramik nach einem der vorhergehenden Ansprüche, **dadurch gekennzeichnet,**
**dass** sie 1,2 bis < 2 Gew.-% ZrO₂ enthält.

15. Transparente LAS-Glaskeramik nach einem der vorhergehenden Ansprüche, **dadurch gekennzeichnet,**
**dass** sie 0 - 0,5 SnO₂ enthält.

16. Transparente LAS-Glaskeramik nach einem der vorhergehenden Ansprüche, **dadurch gekennzeichnet,**
**dass** der Anteil von SnO₂ 0,08 - 0,25 Gew.-% beträgt.

17. Transparente LAS-Glaskeramik nach einem der vorhergehenden Ansprüche, **dadurch gekennzeichnet,**
**dass** der Anteil von SnO₂ 0,05 bis < 0,25 Gew.-% beträgt.

18. Transparente LAS-Glaskeramik nach einem der vorhergehenden Ansprüche, **dadurch gekennzeichnet,**
**dass** sie > 0,01 Gew.-% bis 0,03 Gew.-% Fe₂O₃ enthält.

19. Transparente LAS-Glaskeramik nach einem der vorhergehenden Ansprüche, **dadurch gekennzeichnet,**
**dass** sie keine Halogenidverbindung als Läutermittel enthält.

20. Transparente LAS-Glaskeramik nach Anspruch 1, **dadurch gekennzeichnet,**
**dass** sie folgende Komponenten (in Gew.-% auf Oxidbasis) enthält:
| | |
|---|---|
| Li₂O | 3,2 - 4,2 |
| Na₂O + K₂O | 0,1 - 1,5 |
| MgO | 0,2 - 1,0 |
| CaO + SrO | 0 - 1,5 |
| BaO | 0 - 1,5 |
| CaO + SrO + BaO | 0,2 - 2 |
| ZnO | 1 - 2,5 |
| Al₂O₃ | 19 - 23 |
| SiO₂ | 64 - 68 |
| TiO₂ | 1,6 - < 2,5 |
| ZrO₂ | 1,2 - < 2,0 |
| SnO₂ | 0 - 0,5 |
| Nd₂O₃ | 0,005 - 0,15 |
| Fe₂O₃ | > 0,01 - 0,03 |

21. Transparente LAS-Glaskeramik nach Anspruch 1, **dadurch gekennzeichnet,**
**dass** sie folgende Komponenten (in Gew.% auf Oxidbasis) enthält:
| | |
|---|---|
| Li₂O | 3,2 - < 4,0 |
| Na₂O + K₂O | 0,2 - 1,2 |
| MgO | 0,3 - 0,9 |
| CaO + SrO | 0,05 - 1,5 |
| BaO | 0 - 1,5 |
| CaO + SrO + BaO | 0,4 - 1,8 |
| ZnO | > 1,5 - 2,2 |
| B₂O₃ | 0 - 1 |
| Al₂O₃ | 20 - 23 |
| SiO₂ | 65 - 68 |
| TiO₂ | 1,6 - < 2,5 |
| ZrO₂ | 1,5 - < 2,0 |
| SnO₂ | > 0 - 0,5 |
| TiO₂ + ZrO₂ + SnO₂ | 3,5 - 5 |
| P₂O₅ | 0 - 2 |
| Nd₂O₃ | 0,005 - 0,1 |
| Fe₂O₃ | > 0,013 - 0,025 |

22. Transparente LAS-Glaskeramik nach Anspruch 1, **dadurch gekennzeichnet, dass** sie folgende Komponenten (in Gew.% auf Oxidbasis) enthält:
| | |
|---|---|
| Li₂O | 3,2 - < 4,0 |
| Na₂O + K₂O | 0,2 - 1,2 |
| MgO | 0,3 - 0,9 |
| CaO + SrO | 0,05 - 1,5 |
| BaO | 0 - 1,5 |
| CaO + SrO + BaO | 0,4 - 1,8 |
| ZnO | > 1,5 - 2,2 |
| B₂O₃ | 0 - 1 |
| Al₂O₃ | 20 - 23 |
| SiO₂ | 65 - 68 |
| TiO₂ | 1,6 - < 2,5 |
| ZrO₂ | 1,5 - < 2,0 |
| SnO₂ | > 0 - 0,5 |
| TiO₂ + ZrO₂ + SnO₂ | 3,5 - 5 |
| P₂O₅ | 0 - 2 |
| Nd₂O₃ | 0,005 - 0,1 |
| Fe₂O₃ | > 0,011 - 0,025 |

23. Transparente LAS-Glaskeramik nach Anspruch 1, **dadurch gekennzeichnet, dass** sie folgende Komponenten (in Gew.% auf Oxidbasis) enthält:
| | |
|---|---|
| Li₂O | 3,4 - 3,9 |
| Na₂O + K₂O | 0,2 - 1,0 |
| MgO | 0,4 - 0,9 |
| CaO + SrO | 0,1 - 1,2 |
| BaO | 0 - 1,3 |
| CaO + SrO + BaO | 0,6 - 1,6 |
| ZnO | > 1,5 - 2,0 |
| B₂O₃ | 0 - 1 |
| Al₂O₃ | 20 - 23 |
| SiO₂ | 65 - 68 |
| TiO₂ | 1,8 - < 2,5 |
| ZrO₂ | 1,5 - 1,9 |
| SnO₂ | 0,08 - 0,25 |
| TiO₂ + ZrO₂ + SnO₂ | 3,6 - 4,8 |
| P₂O₅ | 0 - 1 |
| Nd₂O₃ | 0,01 - 0,1 |
| Fe₂O₃ | > 0,013 - 0,022 |

24. Transparente LAS-Glaskeramik nach Anspruch 1, **dadurch gekennzeichnet, dass** sie folgende Komponenten (in Gew.% auf Oxidbasis) enthält:
| | |
|---|---|
| Li₂O | 3,4 - 3,9 |
| Na₂O + K₂O | 0,2 - 1,0 |
| MgO | 0,4 - 0,9 |
| CaO + SrO | 0,1 - 1,2 |
| BaO | 0 - 1,3 |
| CaO + SrO + BaO | 0,6 - 1,6 |
| ZnO | > 1,5 - 2,0 |
| B₂O₃ | 0 - 1 |
| Al₂O₃ | 20 - 23 |
| SiO₂ | 65 - 68 |
| TiO₂ | 1,8 - < 2,5 |
| ZrO₂ | 1,5-1,9 |
| SnO₂ | 0,05 - < 0,25 |
| TiO₂ + ZrO₂ + SnO₂ | 3,6 - 4,8 |
| P₂O₅ | 0 - 1 |
| Nd₂O₃ | 0,01 - 0,1 |
| Fe₂O₃ | > 0,011 - 0,022 |

25. Transparente LAS-Glaskeramik nach einem der vorhergehenden Ansprüche, **dadurch gekennzeichnet, dass** sie
eine Färbung c* von weniger als 5,5 besitzt.

26. Transparente LAS-Glaskeramik nach einem der vorhergehenden Ansprüche, **dadurch gekennzeichnet, dass** sie
eine Lichttransmission Y von größer als 81 % besitzt, und fehlende visuell störende Streuung.

27. Transparente LAS-Glaskeramik nach einem der vorhergehenden Ansprüche, **dadurch gekennzeichnet, dass** nach einer schnellen Keramisierung von weniger als 90 min die Lichttransmission Y größer als 82 % ist und die Färbung c* weniger als 5 bei visuell unauffälliger Streuung beträgt.

28. Transparente LAS-Glaskeramik nach einem der vorhergehenden Ansprüche, **gekennzeichnet durch**
• eine 10²-Temperatur von weniger als 1770 °C, und/oder
• eine Verarbeitungstemperatur V_{A} von höchstens 1325 °C, und/oder
• eine obere Entglasungsgrenze (OEG), die mindestens 10 °C unter der Verarbeitungstemperatur V_{A} liegt.

29. Transparente LAS-Glaskeramik nach einem der vorhergehenden Ansprüche, **dadurch gekennzeichnet, dass** sie in Verbindung mit einer Hochtemperaturläuterung weniger als 2 Blasen/kg aufweist.

30. Transparente LAS-Glaskeramik nach einem der vorhergehenden Ansprüche, **dadurch gekennzeichnet,**
**dass** sie in Form einer Platte vorliegt.

31. Verwendung der LAS-Glaskeramik nach einem der vorhergehenden Ansprüche 1 bis 30 als Kaminsichtscheibe, Brandschutzglas, Sicherheitsglas, Backofensichtscheibe oder als Kochfläche.

## Claims

1. Transparent Li₂O-Al₂O₃-SiO₂- (LAS) glass-ceramic **characterized**
• **in that** it comprises high-quartz mixed crystals as main crystal phase,
• **in that**, apart from unavoidable raw-material impurities, it is arsenic-free and antimony-free,
• **in that** it comprises the following components (in % by weight on an oxide basis):
| | |
|---|---|
| TiO₂ | 1.6 - < 2.5 |
| Nd₂O₃ | 0.005 - 0.15 |
| MgO | 0.2 - 1.0 |
| ZnO | 1 - 2.5 |
| CaO + SrO | 0 - 1.5 |
| BaO | 0 - 1.5 |
with the following proviso B1:
MgO + ZnO > CaO + SrO + BaO.

2. Transparent LAS glass-ceramic according to Claim 1, **characterized**
**in that** it is subject to a proviso B2:
1 < (MgO + ZnO) / (CaO + SrO + BaO) < 3.

3. Transparent LAS glass-ceramic according to Claim 2, **characterized**
**in that** with regard to the proviso B2:
1.5 < (MgO + ZnO) / (CaO + SrO + BaO) < 3.

4. Transparent LAS glass-ceramic according to any of the preceding claims, **characterized in that** the TiO₂ fraction is 1.8 - < 2.5% by weight.

5. Transparent LAS glass-ceramic according to any of the preceding claims, **characterized in that** the BaO fraction is at least 0.1% by weight.

6. Transparent LAS glass-ceramic according to any of the preceding claims, **characterized in that** the sum of CaO + SrO is 0.05 - 1.5% by weight.

7. Transparent LAS glass-ceramic according to any of the preceding claims, **characterized in that** the SrO fraction is 0.05 - 1.5% by weight.

8. Transparent LAS glass-ceramic according to any of the preceding claims, **characterized in that** the CaO fraction is 0.05 - 0.8% by weight.

9. Transparent LAS glass-ceramic according to any of the preceding claims, **characterized in that** the sum of the alkaline earth metal components CaO + SrO + BaO is 0.2 to 2% by weight.

10. Transparent LAS glass-ceramic according to any of the preceding claims, **characterized in that** the sum of the alkaline earth metal components CaO + SrO + BaO is 0.4 to 1.8% by weight.

11. Transparent LAS glass-ceramic according to any of the preceding claims, **characterized by** an average crystallite size of the high-quartz mixed crystals of less than 45 nm.

12. Transparent LAS glass-ceramic according to any of the preceding claims, **characterized in that** it comprises the components Li₂O, Al₂O₃ and SiO₃ with the following fractions (in % by weight on an oxide basis):
| | |
|---|---|
| Li₂O | 3.2 - 4.2 |
| Al₂O₃ | 19 - 23 |
| SiO₂ | 64 - 68. |

13. Transparent LAS glass-ceramic according to any of the preceding claims, **characterized in that** it comprises the following components (in % by weight on an oxide basis):
| | |
|---|---|
| Na₂O + K₂O | 0.1 - 1.5 |

14. Transparent LAS glass-ceramic according to any of the preceding claims, **characterized in that** it comprises 1.2 to < 2% by weight of ZrO₂.

15. Transparent LAS glass-ceramic according to any of the preceding claims, **characterized in that** it comprises 0 - 0.5 of SnO₂.

16. Transparent LAS glass-ceramic according to any of the preceding claims, **characterized in that** the fraction of SnO₂ is 0.08 - 0.25% by weight.

17. Transparent LAS glass-ceramic according to any of the preceding claims, **characterized in that** the fraction of SnO₂ is 0.05 to < 0.25% by weight.

18. Transparent LAS glass-ceramic according to any of the preceding claims, **characterized in that** it comprises > 0.01% by weight to 0.03% by weight of Fe₂O₃.

19. Transparent LAS glass-ceramic according to any of the preceding claims, **characterized in that** it comprises no halide compound as refining agent.

20. Transparent LAS glass-ceramic according to Claim 1, **characterized**
**in that** it comprises the following components (in % by weight on an oxide basis):
| | |
|---|---|
| Li₂O | 3.2 - 4.2 |
| Na₂O + K₂O | 0.1 - 1.5 |
| MgO | 0.2 - 1.0 |
| CaO + SrO | 0 - 1.5 |
| BaO | 0 - 1.5 |
| CaO + SrO + BaO | 0.2 - 2 |
| ZnO | 1 - 2.5 |
| Al₂O₃ | 19 - 23 |
| SiO₂ | 64 - 68 |
| TiO₂ | 1.6 - < 2.5 |
| ZrO₂ | 1.2 - < 2.0 |
| SnO₂ | 0 - 0.5 |
| Nd₂O₃ | 0.005 - 0.15 |
| Fe₂O₃ | > 0.01 - 0.03. |

21. Transparent LAS glass-ceramic according to Claim 1, **characterized**
**in that** it comprises the following components (in % by weight on an oxide basis):
| | |
|---|---|
| Li₂O | 3.2 - < 4.0 |
| Na₂O + K₂O | 0.2 - 1.2 |
| MgO | 0.3 - 0.9 |
| CaO + SrO | 0.05 - 1.5 |
| BaO | 0 - 1.5 |
| CaO + SrO + BaO | 0.4 - 1.8 |
| ZnO | > 1.5 - 2.2 |
| B₂O₃ | 0 - 1 |
| Al₂O₃ | 20 - 23 |
| SiO₂ | 65 - 68 |
| TiO₂ | 1.6 - < 2.5 |
| ZrO₂ | 1.5 - < 2.0 |
| SnO₂ | > 0 - 0.5 |
| TiO₂ + ZrO₂ + SnO₂ | 3.5 - 5 |
| P₂O₅ | 0 - 2 |
| Nd₂O₃ | 0.005 - 0.1 |
| Fe₂O₃ | > 0.013 - 0.025. |

22. Transparent LAS glass-ceramic according to Claim 1, **characterized**
**in that** it comprises the following components (in % by weight on an oxide basis):
| | |
|---|---|
| Li₂O | 3.2 - < 4.0 |
| Na₂O + K₂O | 0.2 - 1.2 |
| MgO | 0.3 - 0.9 |
| CaO + SrO | 0.05 - 1.5 |
| BaO | 0 - 1.5 |
| CaO + SrO + BaO | 0.4 - 1.8 |
| ZnO | > 1.5 - 2.2 |
| B₂O₃ | 0 - 1 |
| Al₂O₃ | 20 - 23 |
| SiO₂ | 65 - 68 |
| TiO₂ | 1.6 - < 2.5 |
| ZrO₂ | 1.5 - < 2.0 |
| SnO₂ | > 0 - 0.5 |
| TiO₂ + ZrO₂ + SnO₂ | 3.5 - 5 |
| P₂O₅ | 0 - 2 |
| Nd₂O₃ | 0.005 - 0.1 |
| Fe₂O₃ | > 0.011 - 0.025. |

23. Transparent LAS glass-ceramic according to Claim 1, **characterized**
**in that** it comprises the following components (in % by weight on an oxide basis):
| | |
|---|---|
| Li₂O | 3.4 - 3.9 |
| Na₂O + K₂O | 0.2 - 1.0 |
| MgO | 0.4 - 0.9 |
| CaO + SrO | 0.1 - 1.2 |
| BaO | 0 - 1.3 |
| CaO + SrO + BaO | 0.6 - 1.6 |
| ZnO | > 1.5 - 2.0 |
| B₂O₃ | 0 - 1 |
| Al₂O₃ | 20 - 23 |
| SiO₂ | 65 - 68 |
| TiO₂ | 1.8 - < 2.5 |
| ZrO₂ | 1.5 - 1.9 |
| SnO₂ | 0.08 - 0.25 |
| TiO₂ + ZrO₂ + SnO₂ | 3.6 - 4.8 |
| P₂O₅ | 0 - 1 |
| Nd₂O₃ | 0.01 - 0.1 |
| Fe₂O₃ | > 0.013 - 0.022. |

24. Transparent LAS glass-ceramic according to Claim 1, **characterized**
**in that** it comprises the following components (in % by weight on an oxide basis):
| | |
|---|---|
| Li₂O | 3.4 - 3.9 |
| Na₂O + K₂O | 0.2 - 1.0 |
| MgO | 0.4 - 0.9 |
| CaO + SrO | 0.1 - 1.2 |
| BaO | 0 - 1.3 |
| CaO + SrO + BaO | 0.6 - 1.6 |
| ZnO | > 1.5 - 2.0 |
| B₂O₃ | 0 - 1 |
| Al₂O₃ | 20 - 23 |
| SiO₂ | 65 - 68 |
| TiO₂ | 1.8 - < 2.5 |
| ZrO₂ | 1.5 - 1.9 |
| SnO₂ | 0.05 - < 0.25 |
| TiO₂ + ZrO₂ + SnO₂ | 3.6 - 4.8 |
| P₂O₅ | 0 - 1 |
| Nd₂O₃ | 0.01 - 0.1 |
| Fe₂O₃ | > 0.011 - 0.022. |

25. Transparent LAS glass-ceramic according to any of the preceding claims, **characterized in that** it possesses a colouration c* of less than 5.5.

26. Transparent LAS glass-ceramic according to any of the preceding claims, **characterized in that** it possesses a light transmission Y of greater than 81%, and no visually distortive scatter.

27. Transparent LAS glass-ceramic according to any of the preceding claims, **characterized in that** after a rapid ceramization of less than 90 minutes, the light transmission Y is greater than 82% and the colouration c* is less than 5 with visually inconspicuous scatter.

28. Transparent LAS glass-ceramic according to any of the preceding claims, **characterized by**
• a 10² temperature of less than 1770°C, and/or
• a working temperature V_{A} of at most 1325°C, and/or
• an upper devitrification limit (UDL) which is at least 10°C below the working temperature V_{A}.

29. Transparent LAS glass-ceramic according to any of the preceding claims, **characterized in that** in conjunction with a high-temperature refining it exhibits less than 2 bubbles/kg.

30. Transparent LAS glass-ceramic according to any of the preceding claims, **characterized in that** it is in the form of a plate.

31. Use of the LAS glass-ceramic according to any of the preceding Claims 1 to 30 as stove sightglass, fire protection glass, safety glass, oven sightglass or as cooking surface.

## Revendications

1. Vitrocéramique Li₂O-Al₂O₃-SiO₂-(LAS) transparente, **caractérisée en ce que**
- elle contient des cristaux mixtes de quartz bêta en tant que phase cristalline principale,
- elle est exempte d'arsenic et d'antimoine à l'exception des impuretés inévitables des matières premières,
- elle contient les composants suivants (en % en poids en termes d'oxydes) :
| | |
|---|---|
| TiO₂ | 1,6 à < 2,5 |
| Nd₂O₃ | 0,005 à 0,15 |
| MgO | 0,2 à 1,0 |
| ZnO | 1 à 2,5, |
| CaO + SrO | 0 à 1,5, |
| BaO | 0 à 1,5 |
à la condition B1 :
MgO + ZnO > CaO + SrO + BaO.

2. Vitrocéramique LAS transparente selon la revendication 1, **caractérisée en ce qu'**une condition B2 s'applique :
1 < (MgO + ZnO)/(CaO + SrO + BaO) < 3.

3. Vitrocéramique LAS transparente selon la revendication 2, **caractérisée en ce que,** pour la condition B2 :
1,5 < (MgO + ZnO)/(CaO + SrO + BaO) < 3.

4. Vitrocéramique LAS transparente selon l'une quelconque des revendications précédentes, **caractérisée en ce que** la proportion de TiO₂ est de 1,8 à < 2,5 % en poids.

5. Vitrocéramique LAS transparente selon l'une quelconque des revendications précédentes, **caractérisée en ce que** la proportion de BaO est d'au moins 0,1 % en poids.

6. Vitrocéramique LAS transparente selon l'une quelconque des revendications précédentes, **caractérisée en ce que** la somme de CaO + SrO est de 0,05 à 1,5 % en poids.

7. Vitrocéramique LAS transparente selon l'une quelconque des revendications précédentes, **caractérisée en ce que** la proportion de SrO est de 0,05 à 1,5 % en poids.

8. Vitrocéramique LAS transparente selon l'une quelconque des revendications précédentes, **caractérisée en ce que** la proportion de CaO est de 0,05 à 0,8 % en poids.

9. Vitrocéramique LAS transparente selon l'une quelconque des revendications précédentes, **caractérisée en ce que** la somme des composants alcalino-terreux CaO + SrO + BaO est de 0,2 à 2 % en poids.

10. Vitrocéramique LAS transparente selon l'une quelconque des revendications précédentes, **caractérisée en ce que** la somme des composants alcalino-terreux CaO + SrO + BaO est de 0,4 à 1,8 % en poids.

11. Vitrocéramique LAS transparente selon l'une quelconque des revendications précédentes, **caractérisée par** une taille de cristallite moyenne des cristaux mixtes de quartz bêta de moins de 45 nm.

12. Vitrocéramique LAS transparente selon l'une quelconque des revendications précédentes, **caractérisée en ce qu**'elle contient les composants Li₂O, Al₂O₃ et SiO₃ en les proportions suivantes (en % en poids en termes d'oxydes) :
| | |
|---|---|
| Li₂O | 3,2 à 4,2, |
| Al₂O₃ | 19 à 23, |
| SiO₂ | 64 à 68. |

13. Vitrocéramique LAS transparente selon l'une quelconque des revendications précédentes, **caractérisée en ce qu**'elle contient les composants suivants (en % en poids en termes d'oxydes) :
| | |
|---|---|
| Na₂O + K₂O | 0,1 à 1,5. |

14. Vitrocéramique LAS transparente selon l'une quelconque des revendications précédentes, **caractérisée en ce qu**'elle contient 1,2 à < 2 % en poids de ZrO₂.

15. Vitrocéramique LAS transparente selon l'une quelconque des revendications précédentes, **caractérisée en ce qu**'elle contient 0 à 0,5 de SnO₂.

16. Vitrocéramique LAS transparente selon l'une quelconque des revendications précédentes, **caractérisée en ce que** la proportion de SnO₂ est de 0,08 à 0,25 % en poids.

17. Vitrocéramique LAS transparente selon l'une quelconque des revendications précédentes, **caractérisée en ce que** la proportion de SnO₂ est de 0,05 à < 0,25 % en poids.

18. Vitrocéramique LAS transparente selon l'une quelconque des revendications précédentes, **caractérisée en ce qu**'elle contient > 0,01 % en poids à 0,03 % en poids de Fe₂O₃.

19. Vitrocéramique LAS transparente selon l'une quelconque des revendications précédentes, **caractérisée en ce qu'**elle ne contient pas de composé d'halogénure en tant qu'agent d'affinage.

20. Vitrocéramique LAS transparente selon la revendication 1, **caractérisée en ce qu**'elle contient les composants suivants (en % en poids en termes d'oxydes) :
| | |
|---|---|
| Li₂O | 3,2 à 4,2, |
| Na₂O + K₂O | 0,1 à 1,5, |
| MgO | 0,2 à 1,0, |
| CaO + SrO | 0 à 1,5, |
| BaO | 0 à 1,5, |
| CaO + SrO + BaO | 0,2 à 2, |
| ZnO | 1 à 2,5, |
| Al₂O₃ | 19 à 23, |
| SiO₂ | 64 à 68, |
| TiO₂ | 1,6 à < 2,5, |
| ZrO₂ | 1,2 à < 2,0, |
| SnO₂ | 0 à 0,5, |
| Nd₂O₃ | 0,005 à 0,15, |
| Fe₂O₃ | > 0,01 à 0,03. |

21. Vitrocéramique LAS transparente selon la revendication 1, **caractérisée en ce qu**'elle contient les composants suivants (en % en poids en termes d'oxydes) :
| | |
|---|---|
| Li₂O | 3,2 à < 4,0, |
| Na₂O + K₂O | 0,2 à 1,2, |
| MgO | 0,3 à 0,9, |
| CaO + SrO | 0,05 à 1,5, |
| BaO | 0 à 1,5, |
| CaO + SrO + BaO | 0,4 à 1,8, |
| ZnO | > 1,5 à 2,2, |
| B₂O₃ | 0 à 1, |
| Al₂O₃ | 20 à 23, |
| SiO₂ | 65 à 68, |
| TiO₂ | 1,6 à < 2,5, |
| ZrO₂ | 1,5 à < 2,0, |
| SnO₂ | > 0 à 0,5, |
| TiO₂ + ZrO₂ + SnO₂ | 3,5 à 5, |
| P₂O₅ | 0 à 2, |
| Nd₂O₃ | 0,005 à 0,1, |
| Fe₂O₃ | > 0,013 à 0,025. |

22. Vitrocéramique LAS transparente selon la revendication 1, **caractérisée en ce qu**'elle contient les composants suivants (en % en poids en termes d'oxydes) :
| | |
|---|---|
| Li₂O | 3,2 à < 4,0, |
| Na₂O + K₂O | 0,2 à 1,2, |
| MgO | 0,3 à 0,9, |
| CaO + SrO | 0,05 à 1,5, |
| BaO | 0 à 1,5, |
| CaO + SrO + BaO | 0,4 à 1,8, |
| ZnO | > 1,5 à 2,2, |
| B₂O₃ | 0 à 1, |
| Al₂O₃ | 20 à 23, |
| SiO₂ | 65 à 68, |
| TiO₂ | 1,6 à < 2,5, |
| ZrO₂ | 1,5 à < 2,0, |
| SnO₂ | > 0 à 0,5, |
| TiO₂ + ZrO₂ + SnO₂ | 3,5 à 5, |
| P₂O₅ | 0 à 2, |
| Nd₂O₃ | 0,005 à 0,1, |
| Fe₂O₃ | > 0,011 à 0,025. |

23. Vitrocéramique LAS transparente selon la revendication 1, **caractérisée en ce qu**'elle contient les composants suivants (en % en poids en termes d'oxydes) :
| | |
|---|---|
| Li₂O | 3,4 à 3,9, |
| Na₂O + K₂O | 0,2 à 1,0, |
| MgO | 0,4 à 0,9, |
| CaO + SrO | 0,1 à 1,2, |
| BaO | 0 à 1,3, |
| CaO + SrO + BaO | 0,6 à 1,6, |
| ZnO | > 1,5 à 2,0, |
| B₂O₃ | 0 à 1, |
| Al₂O₃ | 20 à 23, |
| SiO₂ | 65 à 68, |
| TiO₂ | 1,8 à < 2,5, |
| ZrO₂ | 1,5 à 1,9, |
| SnO₂ | 0,08 à 0,25, |
| TiO₂ + ZrO₂ + SnO₂ | 3,6 à 4,8, |
| P₂O₅ | 0 à 1, |
| Nd₂O₃ | 0,01 à 0,1, |
| Fe₂O₃ | > 0,013 à 0,022. |

24. Vitrocéramique LAS transparente selon la revendication 1, **caractérisée en ce qu**'elle contient les composants suivants (en % en poids en termes d'oxydes) :
| | |
|---|---|
| Li₂O | 3,4 à 3,9, |
| Na₂O + K₂O | 0,2 à 1,0, |
| MgO | 0,4 à 0,9, |
| CaO + SrO | 0,1 à 1,2, |
| BaO | 0 à 1,3, |
| CaO + SrO + BaO | 0,6 à 1,6, |
| ZnO | > 1,5 à 2,0, |
| B₂O₃ | 0 à 1, |
| Al₂O₃ | 20 à 23, |
| SiO₂ | 65 à 68, |
| TiO₂ | 1,8 à < 2,5, |
| ZrO₂ | 1,5 à 1,9, |
| SnO₂ | 0,05 à < 0,25, |
| TiO₂ + ZrO₂ + SnO₂ | 3,6 à 4,8, |
| P₂O₅ | 0 à 1, |
| Nd₂O₃ | 0,01 à 0,1, |
| Fe₂O₃ | > 0,011 à 0,022. |

25. Vitrocéramique LAS transparente selon l'une quelconque des revendications précédentes, **caractérisée en ce qu**'elle présente une coloration c* de moins de 5,5.

26. Vitrocéramique LAS transparente selon l'une quelconque des revendications précédentes, **caractérisée en ce qu**'elle présente une transmission de la lumière Y de plus de 81 %, et aucune diffusion visuellement perturbante.

27. Vitrocéramique LAS transparente selon l'une quelconque des revendications précédentes, **caractérisée en ce qu**'après une céramisation rapide de moins 90 minutes, la transmission de la lumière Y est supérieure à 82 % et la coloration c* est inférieure à 5 sans diffusion visuellement remarquable.

28. Vitrocéramique LAS transparente selon l'une quelconque des revendications précédentes, **caractérisée par :**
- une température 10² de moins de 1 770 °C et/ou
- une température d'usinage V_{A} d'au plus 1 325 °C et/ou
- une limite de dévitrification supérieure (OEG) qui est située au moins 10 °C en-dessous de la température d'usinage V_{A}.

29. Vitrocéramique LAS transparente selon l'une quelconque des revendications précédentes, **caractérisée en ce qu**'elle comprend, en combinaison avec un affinage à température élevée, moins de 2 bulles/kg.

30. Vitrocéramique LAS transparente selon l'une quelconque des revendications précédentes, **caractérisée en ce qu**'elle se présente sous la forme d'une plaque.

31. Utilisation de la vitrocéramique LAS selon l'une quelconque des revendications 1 à 30 précédentes en tant que vitre d'observation de cheminée, verre de protection contre l'incendie, verre de sécurité, vitre d'observation de four de cuisson ou en tant que surface de cuisson.
